Europäisches Patentamt

(19) European Patent Office

Office européen des brevets

(11) Publication number: **0 048 041**
**A2**

# EUROPEAN PATENT APPLICATION

(21) Application number: **81200915.7**

(51) Int. Cl.³: **G 11 B 7/00**

(22) Date of filing: **27.03.79**

(30) Priority: **27.03.78 US 890407**
**27.03.78 US 890771**

(43) Date of publication of application:
**24.03.82 Bulletin 82/12**

(84) Designated Contracting States:
**BE CH DE FR GB IT NL SE**

(60) Publication number of the earlier application
in accordance with Art. 76 EPC: **0 005 316**

(71) Applicant: DISCOVISION ASSOCIATES
P.O. Box 6600 3300 Hyland Avenue
Costa Mesa, California 92626(US)

(72) Inventor: Wilkinson, Richard L.
23920 Anza Avenue
Torrance California 90505(US)

(72) Inventor: Winslow, John S.
4380 Canyon Crest Road
Altadena California 91001(US)

(74) Representative: Arthur, George Fitzgerald et al,
KILBURN & STRODE 30, John Street
London WC1N 2DD(GB)

(54) **Method and apparatus for writing a signal-information track by using a radiation beam.**

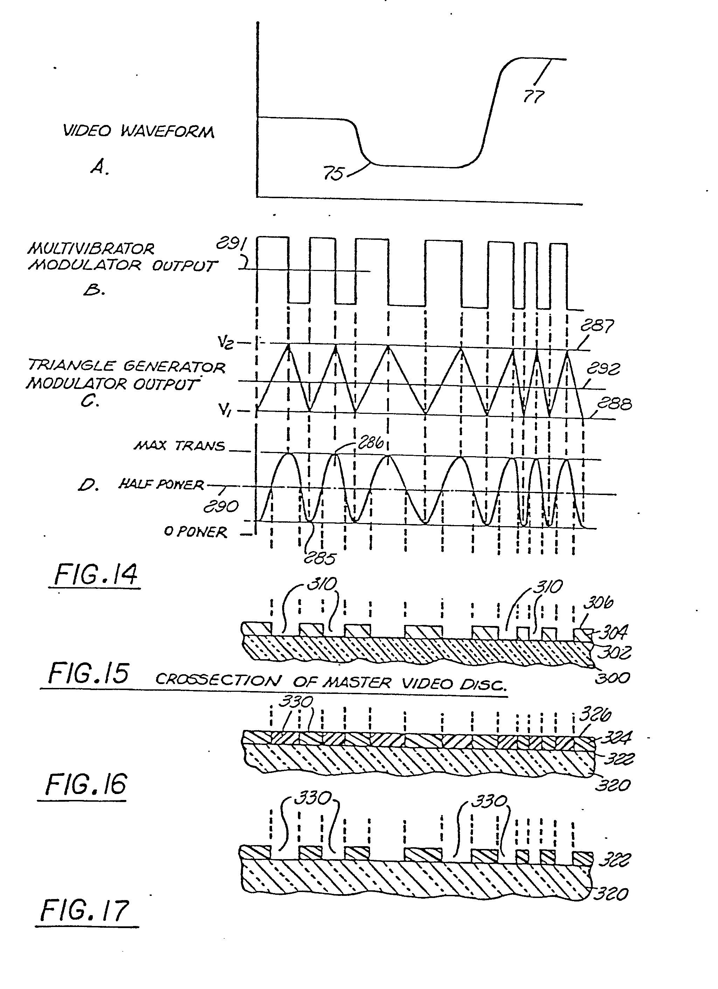

(57) This invention relates to an apparatus and process for writing video information in the form of a frequency modulated signal upon a video disc member and for recovering the video information from the video record is described. The video disc member (10) formed by the writing apparatus is also described. The writing apparatus includes a laser (30) as a source of a laser write beam (29) and a write optical system (40) for directing the stationary laser write beam to a moving video disc member. The video disc member comprises a substrate member carrying a light responsive coating (26) at least one surface. The write optical system focuses the beam to a small spot of light approximately one micron in diameter upon the light responsive layer. The intensity of the focused spot is changeable under the control of a light intensity modulating assembly (44). This light intensity modulator changes the intensity of the write laser beam with respect to a predetermined threshold intensity sufficient to form a first type of indicia (37) in the coating. A read system (165) is employed to retrieve the video signal stored on the video disc member. This read system includes a read laser (150) for generating a read beam, and a motion control assembly for rotating and translating the video disc member relative to the read light beam. A read optical system directs the read beam to impinge upon the successively positioned specular light reflective and non-specular light reflective regions (37,38)
carried by the video disc member. The read optical system also collects the light (150) reflected from these regions. The reflected light beam is intensity modulated by the specular light reflective and non-specular light reflective regions. The read optical system also directed the reflected light beam to a light sensing circuit for changing the intensity modulated reflected light beam to a corresponding frequency modulated electrical signal (165) which is representative of the video signal stored on the video disc member. Circuitry is described for using a triangular frequency modulator (Figure 14C) for driving a Pockels Cell (68) and for obtaining a sinusoidal-shaped light modulation output signal from the linear polariser (70). The output from the linear polariser is adjusted such that the half power point from the polariser equals the threshold power level of the material forming the information storage layer. A second harmonic bias circuit (264) is employed for removing the second harmonic intermodulation distortion of the modulated write beam.

./...

FIG. 1

-1-

OPTICAL APPARATUS AND PROCESS FOR RECORDING
INFORMATION AND RECORD CARRIER FORMED BY THIS
APPARATUS: OPTICAL APPARATUS FOR RETRIEVING
THE RECORDED INFORMATION

The present invention relates to the writing of a
frequency modulated electrical signal upon an information
bearing surface of a disc member in the form of a lineal
series of first and second indicia positioned in track-
like fashion upon such surface. It is divided from
European application No. 79.300490.4 published 14th November
1979 under the number 5316.. That application discloses
apparatus for writing a frequency modulated signal upon a
disc member mounted on a turntable. The turntable is
driven by a motion control assembly which rotates the disc
precisely in a circle at a constant rate of rotation and
a translational drive assembly for translating the writing
beam at a very constant, and very low velocity along a
radius of the rotating disc. The rotational drive of the
disc is synchronised with the translational drive of the
writing beam to create a spiral track of predetermined
pitch. In a preferred embodiment, the spacing between
adjacent tracks of the spiral is two microns, center to
center. The indicia is formed having a width of one micron.
This leaves an intertrack or guard area of one micron between
indicia in adjacent tracks. If desired, the indicia can
be formed as concentric circles by translating in incremental
steps rather than by translating at a constant velocity as
just described.

In the preferred embodiment, a microscope objective lens is positioned at a constant height above the video disc member on an air bearing. This objective lens is employed for focusing the write beam upon the light sensitive surface of the video disc member. The constant height is necessary because of the shallow focal depth of the objective lens. A 0.65 NA dry microscope objective lens is employed to focus the write laser beam to a spot one micron in diameter upon the light sensitive coating. Because the coating is rotating at a relatively high rate, the length of the indicia formed in the light sensitive coating depends upon the length of time the spot intensity exceeds that needed to form such an indicia.

A linearly polarized ion laser is used as the source of the writing beam. A Pockels cell is used to rotate the plane of polarization of the writing beam with respect to its fixed plane of linear polarization. A linear polarizer attenuates the rotated writing beam in an amount proportional to the difference in polarization between the light in the writing beam and the axis of the linear polarizer. The combination of a Pockels cell and linear polarizer modulates the writing beam with the video information to be stored. This modulation follows the pattern provided by control signals furnished by a Pockels cell driver.

The video signal to be recorded is applied to a frequency modulator circuit. The output from the modulator circuit is a rectangular wave whose frequency is proportional to the video signal. The duration of each cycle of the rectangular waveform is variable as is characteristic of a frequency modulated signal. As is characteristic of a rectangular wave, it has an upper voltage level and a lower voltage level. The upper and lower voltage levels of the rectangular wave are amplified by a Pockels cell driver and used to control the Pockels cell. The Pockels cell changes the angle of polarization of the light passing therethrough in response to the instantaneous voltage level of the control signal supplied by the Pockels cell driver.

In a first mode of operation responsive to one voltage level of the rectangular-shaped control signal applied to a Pockels cell driver, the light beam passes unhindered through the Pockels cell linear polarizer combination at a first intensity sufficient to form a first indicia in a light responsive coating. When the control signal changes to represent its second voltage level, the Pockels cell rotates the polarization of the light which forms the writing beam to a new angle of polarization. Due to this change in polarization of the light forming the writing beam, a mismatch occurs between the angle of polarization of the light issuing from the Pockels cell and the preferred angle of polarization of the linear polarizer. In this situation, the linear polarizer acts as an attenuator and less light passes through the linear polarizer. This reduces the light intensity of the writing beam below the intensity required to form such first indicia in the light responsive coating.

A portion of the writing beam is sensed by a Pockels cell stabilizing circuit for maintaining the average power of the modulated writing beam at a predetermined level in spite of changes in the Pockels cell transfer chracteristic produced by small temperature variations. The stabilizing circuit includes a level adjusting circuit for selectively adjusting the power level to form indicia in different light sensitive coatings as identified hereinafter.

The intensity of the write beam is adjusted such that an aperture is formed, for example, during each positive half cycle of the frequency modulated signal to be stored, and no aperture is formed during the negative half cycle. Accordingly, the first and second indicia

representative of the stored information is a lineal series of apertures separated by an intervening portion of the surface coating.

According to the present invention in a method of writing a signal information track on a disc having a surface capable of responding to a certain intensity of laser or other radiation (the threshold level) by being converted from having one radiation reflecting characteristic to having a second characteristic, a beam of radition is directed at a local point along the track and is modulated in intensity as the beam moves along the track to produce first indicia while the beam intensity is above the threshold level and second indicia while it is below that level, and the modulation is in accordance with the signal information which is in the form of a wave whose amplitude alternates between maximum and minimum values so that the first indicia are produced while the wave is at the maximum amplitude and the second indicia are produced while the wave is at the minimum amplitude.

The invention may be carried into practice in various ways, and certain embodiments will now be described by way of example with reference to the accompanying drawings:

FIGURE 1 is a block diagram of the write apparatus;

FIGURE 2 is a cross-sectional view of a video disc member prior to writing thereon using the write apparatus shown in FIGURE 1;

FIGURE 3 is a partial top view of a video disc member after writing has taken place using the write apparatus shown in FIGURE 1;

FIGURE 4 is a waveform of a video signature employed in the write apparatus shown in Figure 1.

FIGURE 5 is a waveform of a frequency modulated signal used in the write apparatus shown in Figure 1;

FIGURE 6 is a graph showing the intensity of the write laser used in the write apparatus shown in Figure 1;

FIGURE 7 is a graph showing the modulated write beam as changed by the write apparatus shown in Figure 1;

FIGURE 8 is a radial cross-sectional view taken along the line 8-8 of the disc shown in Figure 3;

FIGURE 9 is a detailed block diagram of a suitable motion control assembly;

FIGURE 10 is a block diagram showing a read apparatus;

FIGURE 11 is a block diagram showing the combination of a read and write apparatus;

FIGURE 12 is a schematic representation showing the read and write beams passing through a single objective lens as used in the block diagram of Figure 1;

FIGURE 13 is a schematic diagram of a suitable stabilizing circuit for use in the write apparatus shown in Figure 1.

FIGURE 14 shows various waveforms used in illustrating the operation of a mastering machine;

FIGURE 15 shows a cross-sectional schematic view of one form of a video disc,

FIGURE 16 shows a photoresist coded storage member;

FIGURE 17 shows certain portions removed from the photoresist coded storage member of Figure 16;

FIGURE 18 shows the transfer characteristic of a Pockels cell used herein.

FIGURE 19 shows the transfer characteristic of a Glan prism used herein;

FIGURE 20 shows a light intensity waveform;

FIGURE 21 shows in conjunction with Figure 20 a series of waveforms useful in explaining the duty cycle of recording;

FIGURE 22 shows an additional waveform used in illustrating the operation of a mastering machine;

FIGURE 23 is a block diagram of a Pockels cell bias servo system;

FIGURE 24 is a diagram of a second harmonic detector used in Figure 23; and

FIGURE 25 is a diagram of a high voltage amplifier used in Figure 23.

## DETAILED DESCRIPTION OF THE INVENTION

The same numeral is used to identify the same element in the several views. The terms recording and storing are used interchangeably for the term writing. The term retrieving is used interchangeably for the term reading.

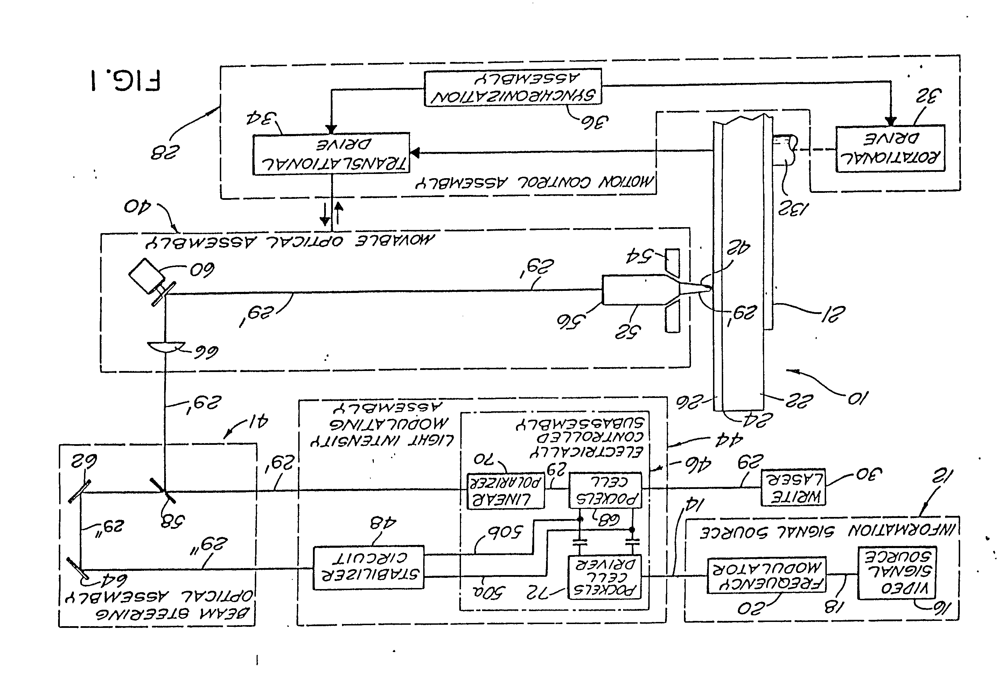

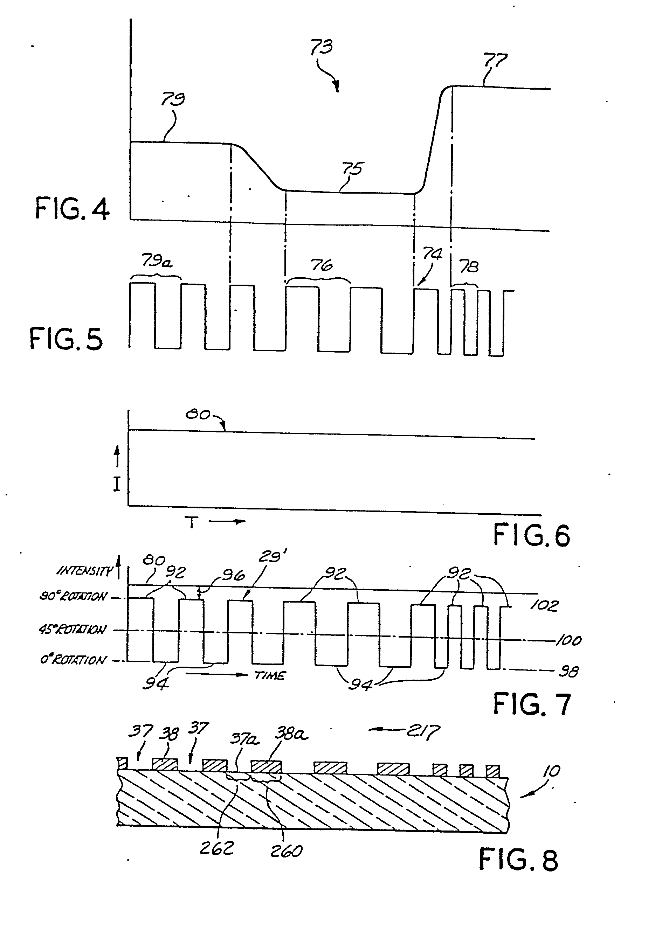

The apparatus for storing video information in the form of a frequency modulated signal upon an information storage member 10 is shown with reference to Figure 1. An information signal source circuit 12 is employed for providing an information signal to be recorded. This information signal present on a line 14 is a frequency modulated signal having its informational content in the form of a carrier frequency having frequency changes in time representing said information to be recorded. Figure 5 shows a typical example of a frequency modulated signal. The information signal source circuit 12 employs a video signal circuit 16 for providing an information signal on a line 18 having its informational content in the form of a voltage varying with time format. Figure 4 shows a typical example of a voltage varying with time signal. A frequency modulator circuit 20 is responsive to the video signal circuit 16 for converting the voltage varying with time signal to the frequency modulated signal on the line 14 as shown in Figure 5.

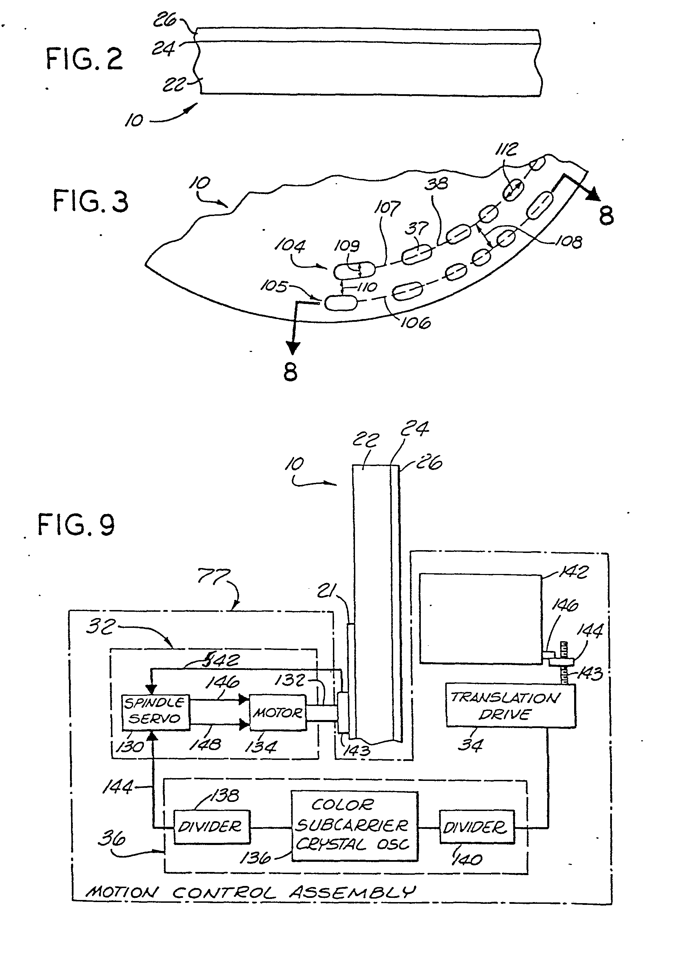

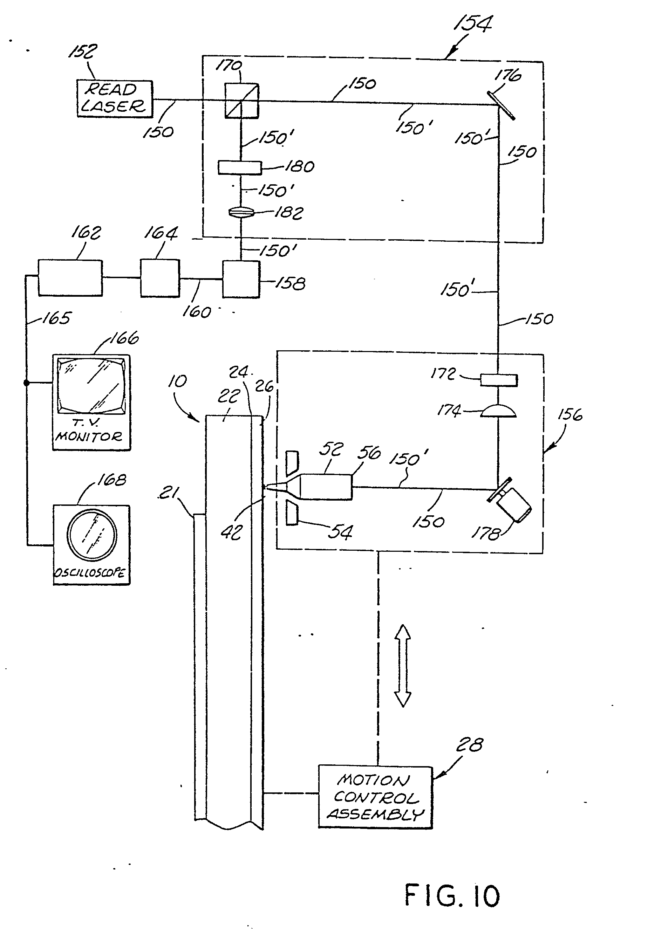

The information storage member 10 is mounted upon a turntable 21. The member 10 is shown in Figure 2 with no indicia formed thereon and includes a substrate 22 having a first surface 24 and a light responsive coating 26 covering the first surface 24. A motion control assembly 28 imparts uniform motion to the storage member 10 relative to a write beam 29' generated by a light source 30. The motion control assembly 28 is shown and described in greater detail with reference to Figure 9. The motion control assembly 28 includes a rotational drive circuit 32 for providing uniform rotational motion to the information storage member 10 and translational drive circuit 34 synchronized with the rotational drive circuit 32 for moving the focused light beam 29' radially across the coating 26. The motion control assembly 28 further includes an electrical synchronizing assembly 36 for maintaining a constant relationship between the rotational motion imparted to the member 10 by the rotational drive circuit 32 and the translational motion imparted to the light beam 29 by the translational drive circuit 34.

The light source 30 provides a beam of light 29 which is of sufficient intensity for interacting with or altering the coating 26 while the coating 26 is in motion and positioned upon the moving information storage member 10. Additionally, the intensity of the light beam 29' is sufficient for producing permanent indicia in the coating 26 representative of the information to be recorded. A suitable light source 30 comprises a writing laser for producing a collimated writing beam of polarized monochromatic light.

Referring again to Figure 2, there is shown a cross-sectional view of a first configuration of a suitable video disc member 10. A suitable substrate 22 is made of glass and has a smooth, flat, planar first surface 24. The light responsive coating 26 is formed upon the surface 24.

In one of the disclosed embodiments, the coating 26 is a thin, opaque metallized layer having suitable physical properties to permit localized heating responsive to the impingement of the write light beam 29 from the writing laser 30. In operation, the heating causes localized melting of the coating 26 accompanied by withdrawal of the molten material towards the perimeter of the melted area. Upon freezing, this leaves a permanent aperture such as at 37, shown in Figures 3 and 8, in the thin metal coating 26. The aperture 37 is one type of indicia employed for representing information. In this embodiment, successively positioned apertures 37 are separated by a portion 38 of the undisturbed coating 26. The portion 38 is the second type of indicia employed for representing information. A more detailed description concerning the process by which the indicia 37 and 38 represent the frequency modulated signal is given with reference to Figures 5 through 8.

A movable optical assembly 40 and a beam steering optical assembly 41 collectively define an optical path for the light beam 29 issuing from the light source 30. The optical assemblies image the read beam 29 into a spot 42 upon the coating 26 carried by the storage member 10. The optical path is also represented by the line identified by the numerals 29 and 29'.

A light intensity modulating assembly 44 is positioned in the optical path 29 between the light source 30 and the coating 26. In its broadest mode of operation, the light intensity modulating assembly intensity modulates the light beam 29 with the information to be stored. The light intensity modulating assembly 44 operates under the control of an amplified form of the frequency modulated signal shown in Figure 5. This frequency modulated signal causes the assembly 44 to change between its higher light transmitting state and its lower light transmitting state during each cycle of the frequency modulated signal. This rapid change between transmitting states modulates the light beam 29 with the frequency modulated signal to be stored.

The light beam 29 is modulated as it passes through the light intensity modulating assembly 44. Thereafter, the modulated light beam, now represented by the numeral 29', is imaged upon the coating 26 by the optical assemblies 40 and 41. As the modulated light beam 29' impinges upon the coating 26, indicia is formed in said coating 26 representative of the frequency modulated signal to be stored.

The light intensity modulating assembly 44 includes an electrically controllable subassembly 46 which is responsive to the frequency modulator 20 for varying the intensity of the light beam 29' above a predetermined intensity at which the focused beam 29' alters the coating 26 carried by the information sotrage member 10. Additionally, the electrically controllable subassembly 46 is responsive to the frequency modulator 20 for varying the intensity of the light beam below a predetermined intensity at which the focused beam 29' fails to alter the coating 26. The alterations formed in the coating 26 are representative of the frequency modulated signal to be stored. When a photoresist layer forms the coating 26 carried by the information storage member 10, the alterations are in the form of exposed and unexposed photoresist members analogous to the size as previously described with respect to indicia 37 and 38, respectively.

When the coating 26 carried by the information storage member 10 is a metal coating, the electrically controllable subassembly 46 varies the intensity of the writing beam 29' above a first predetermined intensity at which the focused beam 29' melts the metal coating without vaporizing it and further varies the intensity of the writing beam below the predetermined intensity at which the focused beam 29' fails to melt the metal surface.

The light intensity modulating assembly 44 includes a stabilizing circuit 48 for providing a feedback signal employed for temperature stabilizing the operating level of the electrical controllable subassembly 46 to operate between a predetermined higher light intensity and predetermined lower light intensity level. The light intensity modulating assembly 44 includes a light sensing circuit for sensing at least a portion of the light beam, indicated at 29", issuing from the electrically controllable subassembly 46 to produce an electrical feedback signal representative of the average intensity of the beam 29'. The feedback signal is connected to the electrically controllable subassembly 46 over the lines 50a and 50b to stabilize its operating level.

The light sensing means produces an electrical feedback signal which is representative of the average intensity of the modulated light beam 29'. In this manner, the light intensity modulating assembly 44 is stabilized to issue the light beam at a substantially constant average power level. The stabilizing circuit 48 also includes level adjustment means for selectively adjusting the average power level of the light beam 29' to a predetermined value to achieve the preferred duty cycle in either a metal coating 26 or a photoresist coating 26, or any other material used as the coating 26.

The movable optical assembly 40 includes an objective lens 52 and a hydrodynamic air bearing 54 for supporting the lens 52 above the coating 26. The laser beam 29' generated by the laser source 30 is formed of substantially parallel light rays. In the absence of the lens 66, these substantially parallel light rays have substantially no natural tendency to diverge. Then the objective lens 52 has an entrance aperture 56 larger in diameter than the diameter of the light beam 29'. A planar convex diverging lens 66 positioned in the light beam 29' is employed for spreading the substantially parallel light beam 29' to at least fill the entrance aperture 56 of the objective lens 52.

The beam steering optical assembly 41 further includes a number of mirror members 58, 60, 62 and 64 for folding the light beams 29' and 29" as desired. The mirror 60 is shown as a movable mirror and is employed for making strictly circular tracks rather than the preferred spiral tracks. Sprial tracks require only a fixed mirror.

As previously descrcribed, the light source 30 produces a polarized laser beam 29. The electrically controllable subassembly 46 rotates the plane of polarization of this laser beam 29 under the control of the frequency modulated signal. A suitable electrically controllable subassembly includes a Pockels cell 68, a linear polarizer 70 and a Pockels cell driver 72. The Pockels cell driver 72 is essentially a linear amplifier and is responsive to the frequency modulated signal on the line 14. The output from the Pockels cell driver 72 provides driving signals to the Pockels cell 68 for rotating the plane of polarization of the laser beam 29. The linear polarizer 70 is orientated in a predetermine relationship with respect to the original plane of polarization of the laser beam 29 issuing from the laser source 30.

As seen with reference to Figure 7, the maximum light transmitting axis of the linear polarizer 70 is positioned at right angle with the angle of·polarization of the light issuing from the source 30. Because of this arrangement, minimum light exits the polarizer 70 with zero degree rotation added to the write beam 29 by the Pockels cell 68. Maximum light exits the polarizer 70 with ninety degree rotation added to the write beam 29 by the Pockels cell 68. This positioning of the linear polarizer as described is a matter of choice. By aligning the maximum light transmitting axis of the polarizer 70 with the angle of polarization of the light issuing from the laser source 30, the maximum and minimum states would be opposite from that described when subjected to zero degrees and ninety degree rotation. However, the write apparatus would essentially operate the same. The linear polarizer 70 functions to attenuate the intensity of the beam 29 which is rotated away from its natural polarization angle. It is this attenuating action by the linear polarizer 70 which forms a modulated laser beam 29' corresponding to the frequency modulated signal.· A Glan-prism is suitable for use as a linear polarizer 70.

The Pockels cell driver 72 is AC coupled to the Pockels cell 68. The stabilizing feedback circuit 48 is DC coupled to the Pockels cell 68.

Referring collectively to Figures 4 through 7, there are shown selective waveforms of electrical and optical signals which are present in the embodiment shown with reference to Figure 1. A video signal generated by the video signal source circuit 16 is shown in Figure 4. A typical device for generating such a video signal is a television camera or a video tape recorder playing back a previously recorded signal generated by a television camera. A flying spot scanner is a still further source of such a video signal. The information signal shown in Figure 4 is typically a one volt peak-to-peak signal having its informational content in the form of a voltage varying with time format is represented by a line 73. The maximum instantaneous rate of change of a typical video signal is limited by the 4.5 megacycles bandwidth. This video signal is of the type which is directly displayable on a television monitor.

The video signal shown in Figure 4 is applied to the frequency modulator 20 as shown in Figure 1. The modulator 20 generates the frequency modulated waveform 74 shown in Figure 5. The informational content of the waveform shown in Figure 5 is the same as the informational content of the waveform shown in Figure 4, but the form is different. The informational signal shown in Figure 5 is a frequency modulated signal having its informational content in the form of a carrier signal having frequency changes in time about a center frequency.

By inspection, it can be seen that the lower amplitude region, generally indicated by a numeral 75, of the video waveform 73 shown in Figure 4, corresponds to the lower frequency portion of the frequency modulated signal 74 shown in Figure 5. One such cycle of the lower frequency portion of the frequency modulated signal 74 is indicated generally by a bracket 76. A higher amplitude region, indicated generally by the numeral 77 of the video waveform 73, corresponds to the higher frequency portions of the frequency modulated signal 74. One complete cycle of the higher frequency portion of the frequency modulated signal 74 is represented by a bracket 78. An intermediate amplitude region, generally indicated with a numeral 79 of the video waveform 73, corresponds to the intermediate frequency portions of the frequency modulated signal·74. A single cycle of the higher frequency portion of the frequency modulated signal representing the intermediate amplitude region 79 is indicated by a bracket 79a.

By an inspection of Figures 4 and 5, it can be seen that the frequency modulator 20, shown in Figure 1, converts the voltage varying with time signal shown in Figure 4, to a frequency modulated signal as shown in Figure 5.

Figure 6 illustrates the intensity of the writing beam 29 generated by the write laser 30. The intensity of the write beam 29 is shown to be at a constant level represented by the line 80. After initial setup procedures, this intensity remains unchanged.

Figure 7 illustrates the intensity of the writing beam 29' after its passage through the light intensity modulating assembly 44. The intensity modulated writing beam is shown having a plurality of upper peaks 92 representing the higher light transmitting state of the light intensity modulating assembly 44, and having a plurality of valleys 94 representing the low light transmitting state of the light intensity modulating assembly 44. The line 80 representing the maximum intensity of the laser 30 is superimposed with the waveform 29' to show that some loss in light intensity occurs in the assembly 44. This loss is indicated by a line 96 showing the difference in the intensity of the light beam 29' generated by the laser 30 and the maximum intensity 92 of the light beam 29' modulated by the assembly 44.

This intensity modulation of the writing beam 29 to form an intensity modulated writing beam 29' is best illustrated by an inspection of Figures 6 and 7. Figure 6 shows the unmodulated beam 29 having a constant intensity represented by the line 80. Figure 7 shows the modulated beam 29' having maximum levels of intensity indicated at 92 and minimum levels of intensity indicated at 94.

The intensity modulation of the writing beam 29 is compared to the rotational effect of the Pockels cell 68 by reference to lines 98, 100 and 102. The intersection of the line 98 with the line 29' shows the intensity of the beam 29' issuing from the linear polarizer 70 when the Pockels cell 68 adds no rotation to the angle of polarization of the light passing therethrough. The intersection of the line 100 with the line 29' shows the intensity of the beam 29' issuing from the linear polarizer 70 when the Pockels cell 68 adds a forty-five degree rotation to the angle of polarization of the light passing therethrough. The intersection of the line 102 with the line 29' shows the intensity of the read beam 29' issuing from the linear polarizer 70 when the Pockels cell 68 adds a ninety degree rotation to the angle of polarization of the light passing therethrough.

The formation of an aperture, such as 37 shown in Figures 3 and 8, by the intensity modulated beam 29', shown in Figure 7 can best be understood by a comparison between the two Figures 7 and 8.

The line 100 is drawn midpoint between the intensity 92 representing the higher light transmitting state of the assembly 44 and the intensity 94 representing the lower transmitting state of the assembly 44. The line 100 represents the intensity generated by the assembly 44 when the Pockels cell 68 rotates the angle of polarization of the write beam 29 passing therethrough through an angle of forty-five degrees. Additionally, the line 100 represents the threshold intensity of the modulated beam 29' required to form an indicia in the light responsive coating 26. This threshold is reached upon rotation of the angle of polarization of the write beam 29 through an angle of forty-five degrees.

By a comparison between Figures 7 and 8, it can be seen that an aperture 37 is formed while the Pockels cell 68 is rotating the angle of polarization of the write beam 29 passing therethrough between the angle of forty-five degrees and ninety degrees and back to forty-five degrees. No aperture is formed while the Pockels cell 68 is rotating the angle of polarization of the write beam 29 passing therethrough between the angle of forty-five degrees and ninety degrees and back to forty-five degrees. No aperture is formed while the Pockels cell 68 is rotating the angle of polarization of the write beam 29 passing therethrough between the angle of forty-five degrees and zero degrees and back to forty-five degrees.

Referring again to Figure 3, there is shown a top view of the video disc member shown in radial cross-sectional view in Figure 8. An inspection of this Figure 3 is helpful in understanding the manner in which the lineal series of light reflecting and light scatter-regions 38 and 37 are formed upon the video disc member 10. The disc member 10 is rotated at a preferred rotational rate of 1800 rpm and the indicia 37 and 38 are formed in the light responsive coating 26 as shown with reference to Figure 8. The motion control assembly 28, shown with reference to Figure 1, forms the apertures 37 in circular track-like fashion. A numeral 104 is employed to identify a section of an inner track, and a numeral 105 is employed to identify a section of an outer track. A dashed line 106 represents the center line of the track 105 and a dashed line 107 represents the center line of the track 104. The length of a line 108 represents the distance between the center lines 106 and 107 of adjacent tracks 105 and 104. Two microns is a typical distance between center lines of adjacent tracks. The width of an aperture 37 is indicated by the length of a line 109. A typical width of an aperture is one micron. The distance between adjacent apertures is represented by the length of a line 110. This distance between adjacent tracks is known as the intertrack region and typically is one micron in length. The length of an aperture is represented by a line 112 and typically varies between 1.0 and 1.5 microns. All of these dimensions depend upon many variables in the write apparatus. For example, these dimensions vary depending upon the frequency range generated by the frequency modulator 20, the size of the spot 42 formed by the write optical systems 41 and 42 and the rotational speed selected for the disc 10.

Referring to Figure 9, there can be seen a more detailed block diagram of the motion control assembly 28 shown with reference to Figure 1. The rotational drive circuit 32 includes a spindle servo circuit 130 and a spindle shaft 132. The spindle shaft 132 is integrally joined to the turntable 21. The spindle shaft 132 is driven by a printed circuit type motor 134. The rotational motion provided by the printed circuit motor 134 is controlled by the spindle servo circuit 130 which phase locks the rotational speed of the turntable 21 to a signal generated by a color subcarrier crystal oscillator 136 which forms a portion of the synchronization assembly 36. The synchronization assembly 36 further includes a first divider circuit 138 and a second divider circuit 140. The first divider circuit 138 reduces the color subcarrier frequency generated in the oscillator circuit 136 down to a rotational reference frequency. The spindle shaft 132 contains a tachometer 143 for generating a frequency signal indicating the exact rotational speed of the shaft 132 and turntable 21 combination. The tachometer signal is available over a line 542 and the rotational reference signal from the first divider circuit 138 is available on a line 144. The tachometer signal on line 542 is applied to the spindle servo circuit 130 and the rotational reference signal on the line 144 is also applied to the spindle servo circuit 130. The spindle servo circuit 130 phase compares these two input signals. When the phase of the tachometer signal leads the phase of the rotational reference signal, the rate of rotation is too high and a signal is generated in the spindle servo circuit 130 for application to the motor 134 over a line 146 to slow the rotational speed and bring the tachometer signal into phase agreement with the rotational reference signal. When the phase of the tachometer signal lags the phase of the rotational reference signal as compared in the spindle servo circuit 130, the rate of rotation is too slow and a signal is generated in the spindle servo circuit 130 for application to the motor 134 over a line 148 to increase the rotational speed and bring the phase of the tachometer signal into agreement with the phase of the rotational reference signal.

The second divider circuit 140 reduces the color subcarrier frequency generated by the oscillator 136 down to a translational reference frequency for advancing the translational drive circuit 34 a fixed distance for each complete revolution of the member 10. In the preferred embodiment, the distance advanced by the translational drive circuit 34 for each revolution of the member 10 is a distance of two microns.

The color subcarrier crystal oscillator 136 with its two divider circuits 138 and 140 functions as an electrical synchronizing circuit for maintaining a constant relationship between the rotational motion of the disc as provided by the rotational drive assembly 32 and the translational motion between the write beam 29 and the coating 26 is provided by the translation drive assembly 34.

The movable optical assemblies illustrated in Figures 1, 10 and 11 are mounted on a platform indicated at 142. This movable platform is driven radially by the translational drive 34 which advances the platform 142 2.0 microns per revolution of the spindle shaft 132. This translational movement is radial with respect to the rotating disc 10. This radial advancement per revolution of the spindle shaft 132 is identified as the pitch of the recording. Since the pitch uniformity of the finished recording depends on the steady advance of the optical assemblies mounted on the platform 142, care is taken to lap a lead screw 143 in the translation drive 34, preload a translation drive nut 144 which engages the lead screw 143 and make the connection between the nut 144 and the platform 142 as stiff as possible as represented by a bar 146.

Referring to Figure 10, there is shown a read apparatus which is employed for retrieving the frequency modulated signal stored on the information storage member 10 as a lineal series of indicia 37 amd 38 previously described. A reading beam 150 is generated by a read laser 152 which produces a polarized, collimated beam 150 of light. A support member, such as the turntable 21, is employed for holding the information storage member 10 in a substantially predetermined position.

A stationary read optical assembly 154 and a movable optical assembly 156 define a read optical path over which the read light beam 150 travels between the laser source 152 and the information storage member 10. Additionally, either of the optical assemblies can be employed to focus the light beam 150 upon the alternately positioned light reflective regions 38 and the light scattering regions 37 carried in successive positions upon the information storage member 10. The movable optical assembly 156 is employed for collecting the reflections from the light reflective regions 38 and the light scattering regions 37. The motion control assembly 28 provides relative motion between the read beam 150 and the alternate regions of light reflectivity 38 and light scattering 37.

The optical assemblies 154 and 156 also define the optical path travelled by the beam reflected from the coating 26. The path of the reflected beam is identified by the numeral 150'. This reflected light path 150' includes a portion of the initial read beam path 150. In those portions where the reflected beam 150' coincides with the read beam 150, both numerals 150 and 150' are used. A light sensing element 158 is positioned in the reflected light beam path 150' and is employed for generating a frequency modulated electrical signal corresponding to the reflections impinging thereupon. The frequency modulated electrical signal generated by the light sensing element 158 is present on a line 160 and has its informational content in the form of a carrier frequency having frequency changes in time corresponding to the stored information. The output of the light sensing circuit 158 is applied to a discriminator circuit 162 by an amplifier 164. The discriminator circuit 162 is responsive to the output of the light sensing circuit 158 and is employed for changing the frequency modulated electrical signal into a time dependent voltage signal representing the stored information. The time dependent voltage signal is also identified as a video signal and it is present on a line 165. This time dependent voltage signal has its informational content in the form of a voltage varying with time format and is suitable for display over a standard television monitor 166 and/or an oscilloscope 168.

The read optical assemblies 154 and 156 further include a polarization selective beam splitting member 170 which functions as a beam polarizer to the incident beam 150 and which functions as a selective beam splitter to the reflected beam 150'. The read optical assemblies further include a quarterwave plate 172. The beam polarizer 170 filters out from the read beam 150 any spurious light waves which are not aligned with the axis of polarization of the beam polarizer 170. With the axis of polarization of the read beam 150 fixed in a particular orientation by the member 170, the quarterwave plate 172 changes the plane of polarization from linear to circular. The member 170 and the quarterwave plate 172 are disposed in the read light beam path 150. The member 170 is located between the source 152 of the read beam 150 and the quarterwave plate 172. The quarterwave plate 172 is also located in the reflected read beam path 150'. Therefore, not only does the quarterwave plate 172 change the read beam polarization from linear to circular during its travel from the read laser 152 to the information storage member 10, but the quarterwave plate 172 further changes the circularly polarized reflected light back into linearly polarized light which is rotated ninety degrees with respect to the preferred direction fixed by the source 152 and the member 170. This rotated beam 150' is selectively directed to the light sensing element 158 which changes the reflected light beam 150' into a corresponding electrical signal. It is to be noted that the member 170 reduces the intensity of the incident light beam 150 as it passes therethrough. This drop in intensity is compensated for by setting the initial intensity of the read beam 150 to a level sufficient to offset this reduction. The quarterwave plate 172 gives a total rotation of ninety degrees to the reflected beam 150' with respect to the incident beam 150 during the change from linear polarization to circular polarization and back to linear polarization. As previously mentioned, the member 170 is also a beam splitting cube in the reflected read beam path 150'. As the plane of polarization of the reflected read beam 150' is shifted ninety degrees due to its double passage through the quarterwave plate 172, the beam splitting cube portion of the member 170 directs the reflected read beam 150' to the light sensing circuit 158. A suitable element for functioning in the capacity of a light sensing element 158 is a photodiode. Each such element 158 is capable of changing the reflected frequency modulated light beam 150' into an electrical signal having its information content in the form of a carrier frequency having frequency variations in time varying from the carrier frequency. The optical assemblies 154 and 156 further comprise the objective lens 52 supported by a hydrodynamic air bearing member 54 which supports the lens 52 above the coating 26 carried by the information storage member 10.

As previously described, the read beam 150 is formed with substantially parallel light rays. The objective lens 52 has an entrance aperture 56 larger in diameter than the diameter of the read beam 150 as it is generated by the laser source 152. A planar convex diverging lens 174 is provided intermediate the laser source 152 and the entrance aperture 56 of the objective lens 52 for spreading the substantially parallel light rays forming the reading beam 150 into a light beam 150 having a diameter sufficient to at least fill the entrance aperture 56 of the objective lens 52. The optical assemblies 154 and 156 further include a number of stationary or adjustable mirrors 176 and 178 for folding the read light beam 150 and the reflected light beam 150' along a path calculated to impinge upon the previously mentioned elements.

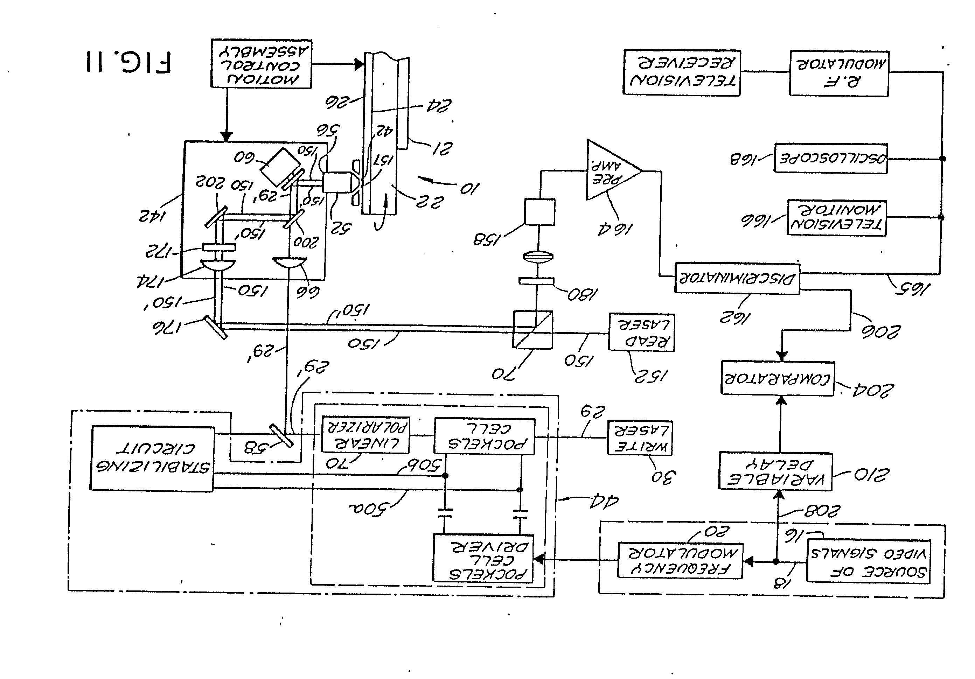

An optional optical filter 180 is positioned in the reflected beam path 150' and filters out all wavelengths other than that of the incident beam. The use of this filter 180 improves picture quality as displayed over the television monitor 166. This filter 180 is essential when the read system is used with the write system as discussed in greater detail with reference to Figure 11. In this read after write environment, a portion of the write beam 29 travels along the reflected read beam path 150'. The filter stops this portion of the write beam and passes the full intensity of the reflected beam 150'.

An optional converging lens 182 is positioned in the reflected beam path 150' for imaging the reflected beam onto the active area of the light sensing element 158. This converging lens 182 reduces the diameter of the reflected beam 150' and concentrates the light intensity of the reflected beam upon the active area of the light sensing element 158.

The amplifier 164 amplifies the output of the light sensing element 158 and raises the amplitude of the frequency modulated electrical signal generated by the light sensing element 158 to match an input signal requirement of the demodulator 162.

Referring again to the electrical and optical waveforms shown in Figures 4 through 7, these waveforms are also generated by the read apparatus, shown in Figure 10 during the retrieval of the frequency modulated signal stored in the coating 26 carried by the disc 10. Figure 6 shows a laser source generating a write laser beam having a constant intensity represented by the line 80. The read laser 152 generates a read beam 150 having a constant intensity but at a lower level.

Figure 7 shows an intensity modulated write laser beam. The reflected read beam 150' is intensity modulated by the act of impinging upon the light reflective and light scattering regions 38 and 37 carried on the disc member 10. The reflected read beam 150' will not be a perfect squarewave as shown in Figure 7. Rather, the square edges are rounded by the finite size of the read spot.

Figure 5 shows a frequency modulated electrical signal having its informational content in the form of a carrier signal having frequency changes in time varying about the center frequency. The output of the light sensing element 158 is the same type of signal. Figure 4 shows a video signal having its informational content in the form of a voltage varying with time format. The output of the demodulator 162 is the same type of signal.

The motion control assembly 28 shown in Figure 10 operates in the same manner as the motion control assembly 28 shown in Figure 1. In the read apparatus, the motion control assembly 28 produces a rotational motion to the disc member under the control of a rotational drive assembly 32. The assembly 28 further produces a translational motion for moving the movable read optical assembly 156 radially across the surface of the storage member.

The assembly 28 further includes a synchronizing circuit for maintaining a constant relationship between the rotational motion and the translational motion so that the read beam 150 impinges upon the information tracks carried by the disc member 10. Portions of typical information tracks are shown as 104 and 105 in Figure 3.

Referring to Figure 11, there is shown a block diagram illustrating the combination of the write apparatus shown in Figure 1, and the read apparatus shown in Figure 10. The elements shown in Figure 11 operate in an identical manner as previously described and this detailed operation is not repeated here. Only a brief description is given to avoid repetition and confusion.

The unmodulated write beam path is shown at 29 and the modulated beam path is shown at 29'. A first optical assembly defines the modulated beam path 29' between the output of the linear polarizer 70 and the coating 26. The fixed, write optical assembly 41 includes the mirror 58. The movable, write optical assembly 40 includes the diverging lens 66, a partially transmissive mirror 200, a movable mirror 60 and the objective lens 52.

The modulated write beam 29' is imaged to a write spot 42 upon the light responsive coating and interacts with the coating to form indicia as previously described.

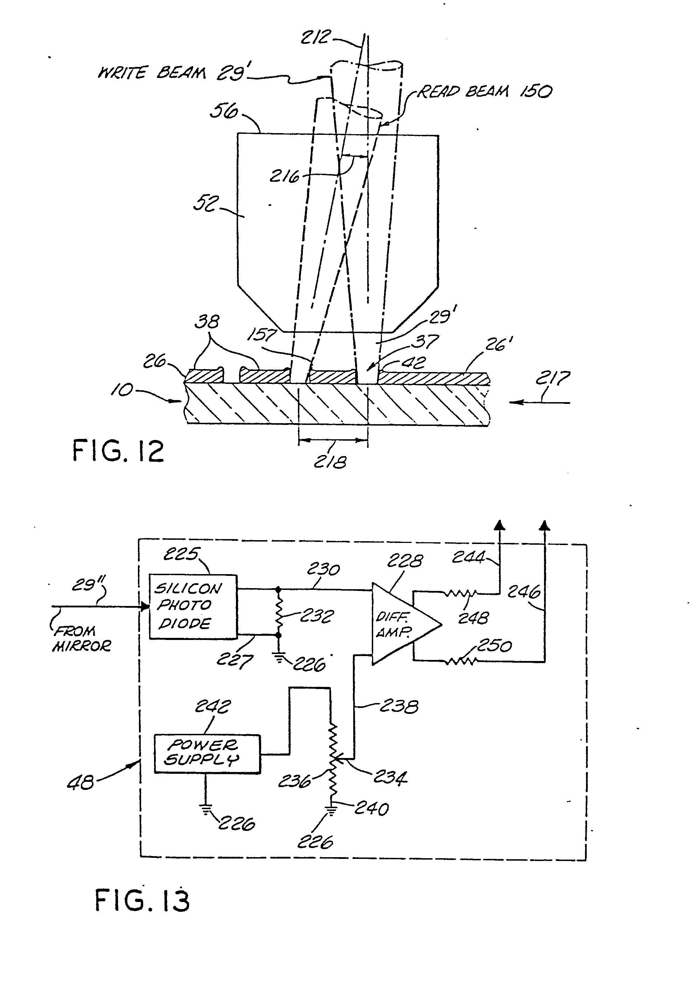

The read beam path is shown at 150. The read optical assemblies define a second optical path for the read beam 150 between the read laser 152 and the information storage record carrier 10. The fixed, read optical assembly 154 includes the mirror 176. The movable, read optical assembly 156 includes the diverging lens 174, the polarization shifting means 172, a second fixed mirror 202, the partially transmissive mirror 200, the movable mirror 60 and the lens 52. The read beam 150 is imaged to a read spot 157 at a point spaced downstream from the write spot 42, as is more completely described with reference to Figure 12.

The mirror 200 is a dichroic mirror which is transmissive at the wavelength of the write beam 29' and which is reflective at the wavelength of the read beam 150'.

The intensity of the write beam 29' is higher than the intensity of the read beam 150. While the write beam 29' must alter the light responsive coating 26 to retain indicia representative of the video signal to be stored, the intensity of the read beam 150 should only be sufficient to illuminate the indicia formed in the coating 26 and provide a reflected light beam 150' of sufficient intensity to provide a good signal after collection by the read optical assembly and conversion from an intensity modulated reflected beam 150' to a frequency modulated electrical signal by the light sensing circuit 158.

The fixed mirror 58 in the write optical path and the two fixed mirrors 176 and 202 in the read optical path are employed for directing the write beam 29' toward the objective lens 56 at a controlled angle with respect to the read beam 150. This angle between the two incident beams provides a spacing between the write spot 42 and read spot 157 as they are each respectively imaged upon the coating 26.

In operation, a sufficient spacing has been found to be four to six microns. This distance corresponds to an angle too small to show clearly in Figure 12. Accordingly, this angle is exaggerated in Figure 12 for purpose of illustration only.

The read beam 150' is demodulated in a discriminator circuit 162 and displayed on a standard television monitor 166 and an oscilloscope 168. The television monitor 166 shows the pictorial quality of the recording and the oscilloscope 168 shows the video signal in more detail. This read after write function allows the quality of the video signal being stored during a write operation to be instantaneously monitored. In the event that the quality of the stored signal is poor, it is known immediately and the write procedure can be corrected or the information storage member 10 storing the poor quality video information signal can be discarded.

In the read after write mode of operation, the write laser 30 and the read laser 152 are operating at the same time. A dichroic mirror 200 is employed for combining the read beam 150 into the write beam 29'. In this read after write mode of operation, the wavelength of the write beam 29 is chosen to be different from the wavelength of the read beam 150. An optical filter 180 is employed for blocking any portion of a write beam which has followed the reflected read beam path. Accordingly, the optical filter 180 passes the reflected read beam 150' and filters out any part of the write laser beam 29' following the reflected read beam path 150'.

In the comparison mode of operation, the read after write operation is practiced as described with reference to Figure 11. When operating in this monitoring mode of operation, a comparator circuit 204 compares the output of the demodulator 162 with the original video information signal provided by the source 18.

More specifically, the video output of the discriminator 162 is applied to a comparator 204 over a line 206. The other input of the comparator 204 is taken from the video source 16 over the line 18, an additional line 208 and through a delay line 210. The delay line 210 imparts a time delay to the input video information signal equal to the accumulated values of the delay beginning with the frequency modulation of the input video information signal and extending through the frequency demodulation of the recovered electrical signal from the sensing circuit 158. This delay also includes the delay of travel time from the point on said storage member 10 at which the input video information signal is stored upon the information storage member by the write spot 42 and continuing to the point of impingement of the read spot 157.

The correct amount of delay is best generated by making the delay circuit 210 a variable delay circuit which is adjusted for optimum operation.

Ideally, the video output signal of the discriminator 162 is identical in all respects to the video input signal on the lines 18 and 208. Any differences noted represent errors which might be caused by imperfections in the disc's surface or malfunctions of the writing circuits. This application, while essential if recording digital information, is less critical when other information is recorded.

The output signal from the comparator circuit 204 may be counted, in a counter (not shown), for establishing the actual number of errors present on any disc. When the errors counted exceed the predetermined selected number, the writing operation is terminated. If necessary, a new disc can be written. Any disc with excessive errors can then be reprocessed.

In Figure 11, the comparator 204 compares the output signals available on the lines 208 and 206. An alternative and more direct connection of the comparator 204 is to compare the output of the frequency modulator 20 and the amplifier 164 shown with reference to Figure 10.

Turning next to Figure 12, there is shown in somewhat exaggerated form, the slightly differing optical paths of the intensity modulated write beam 29' from the writing laser 30 and the unmodulated read beam 150 from the reading laser 152. The information storage member 10 is moving in the direction indicated by an arrow 217.

This shows an unexposed coating 26 approaching the write beam 29' and a lineal series of apertures 37 leaving the intersection of the write beam 29' and the coating 26. The writing beam 29' coincides with the optical axis of the microscope objective lens 52. The central axis of the reading beam 150 shown as 212 makes an angle with the central axis of the write beam 29' shown as 214. The angle is represented by a double headed arrow 216. Due to this slight difference in optical paths of the write beam 29' and read beam 150 through the lens 52, the write spot 42 falls a distance ahead of the read spot 157. The write spot 42 leads the read spots 157 by a distance equal to the length of a line 218. The length of the line 218 is equal to the angle times the focal length of the objective lens 52. The resulting delay between writing and reading allows the molten metal coating 26 to solidify so that the recording is read in its final solidified state. If it were read too soon while the metal was still molten, the reflection from the edge of the aperture would fail to provide a high quality signal for display on the monitor 166.

Referring to Figure 13, there is shown an idealized diagram of a Pockels cell stabilizing circuit 48 suitable for use in the apparatus of Figure 1. As is known, a Pockels cell 68 rotates the plane of polarization of the applied write light beam 29 as a function of an applied voltage as illustrated with reference to Figure 7.

Depending upon the individual Pockels cell 68, a voltage change of the order of 100 volts causes the cell to rotate the plane of polarization of the light passing therethrough a full ninety degrees. The Pockels cell driver functions to amplify the output from the information signal source 12 to a peak-to-peak output swing of 100 volts. This provides a proper input driving signal to the Pockels cell 68. The Pockels cell driver 72 generates a waveform having the shape shown in Figure 5 and having a peak-to-peak voltage swing of 100 volts.

The Pockels cell should be operated at an average rotation of forty-five degrees in order to make the modulated light beam intensity most faithfully reproduce the electrical drive signal. A bias voltage must be provided to the Pockels cell for keeping the Pockels cell at this average operating point. In practice, the electrical bias voltage corresponding to a forty-five degree rotation operating point varies continuously. This continuously changing bias voltage is generated through the use of a servo feedback loop. This feedback loop includes the comparison of the average value of the transmitted light to an adjustable reference value and applying the difference signal to the Pockels cell by means of a DC amplifier. This arrangement stabilizes the operating point. The reference value can be adjusted to correspond to the average transmission corresponding to the forty-five degree operating point and the servo feedback loop provides corrective bias voltages to maintain the Pockels cell at this average rotation of forty-five degrees.

The stabilizing circuit 48 includes a light sensing means 225. A silicon diode operates as a suitable light sensing means. The diode 225 senses a portion 29" of the writing beam 29' issuing from the optical modulator 44 and passing through the partially reflective mirror 58 as shown in Figure 1. The silicon diode 225 functions in much the same fashion as a solar cell and is a source of electrical energy when illuminated by incident radiation. One output lead of the silicon diode 225 is connected to common reference potential 226 by a line 227. The other output lead of the diode 225 is connected to one input of a differential amplifier 228 by a line 230. The output leads of the silicon cell 225 are shunted by a load resistor 232 which enables a linear response mode.

The other input to the differential amplifier 228 is connected to an adjustable arm 234 of a potentiometer 236 by a line 238. One end of the potentiometer 236 is connected to reference potential 226 by a line 240. A source of power 242 is coupled to the other end of the potentiometer 236 which enables the adjustment of the differential amplifier 228 to generate a feedback signal on the lines 244 and 246 for adjusting the average power level of the modulated laser beam 29' to a predetermined value.

The output terminals of the differential amplifier 228 are, respectively, connected through resistive elements 248 and 250 and output lines 244 and 246 to the input terminals of the Pockels cell 68 in Figure 1. The Pockels cell driver 72 is AC coupled to the Pockels cell 68 by way of capacitive elements 252 and 254, respectively, while the differential amplifier 228 is DC coupled to the Pockels cell 68.

In operation, the system is energized. The portion 29" of the light from the writing beam 29' impinging on the silicon diode 225 generates a differential voltage at one input to the differential amplifier 228. Initially, the potentiometer 236 is adjusted so that the average transmission through the Pockels cell corresponds to forty-five degree of rotation. Thereafter, if the average level of intensity impinging on the silicon cell 225 either increases or decreases, a correcting voltage will be generated by the differential amplifier 228. The correcting voltage applied to the Pockels cell 68 is of a polarity and magnitude adequate to restore the average level of intensity to the predetermined level selected by adjustment of the input voltage to the other input of the differential amplifier over the line 238, by movement of the movable arms 234 along the potentiometer 236.

The adjustable arms 234 of potentiometer 236 is the means for selecting the average level of intensity of the light generated by the write laser 30. Optimum results are achieved when the length of an aperture 37 exactly equals the length of the next succeeding space 38 as previously described. The adjustment of potentiometer 236 is the means for achieving this equality of length. When the length of an aperture equals the length of its next adjacent space, a duty cycle of fifty-fifty is achieved. Such duty cycle is detectable by examining the display of the just written information on the TV monitor and/or oscilloscope 166 and 168, respectively, as previously described. Commercially acceptable results occur when the length of an aperture 37 varies between forty and sixty percent of the combined length of an aperture and its next successively positioned space. In other words, the length of an aperture and the next successively positioned space is measured. The aperture can then be a length falling within the range of forty and sixty percent of the total length.

Referring to Figure 8, there is shown a radial cross-section of an information track shown with reference to Figure 3 in which a specular light reflective region 38 is positioned intermediate a pair of non-specular light reflective regions 37. In the radial cross-sectional view shown in Figure 8, the impinging read or write beam is moving relative to the member 10 in the direction represented by the arrow 217. This means that a reading beam impinges first upon the specular light reflective region 38a followed by its impingement upon the non-specular light reflective region 37a. In this configuration, the positive half cycle of the signal to be recorded is represented by a specular light reflective region 38a and the negative half cycle of the signal to be recorded is represented by the non-specular light reflective region 37a. The duty cycle of the signal shown with reference to Figure 8 is a fifty percent duty cycle insofar as the length of the specular light reflected region 38a as represented by a bracket 260, is equal in length to the length of the non-specular light reflective region 37a as represented by the bracket 262. This preferred duty cycle set up by the combination of adjusting the absolute intensity of the write beam 29 by adjusting the power supply of the write laser 30 and by adjusting the potentiometer 236 in the stabilizing circuit 48 to a level wherein an aperture is formed beginning with a forty-five degree rotation of the angle of polarization in the write beam 29.

Referring again to the aperture forming process illustrated with reference to Figures 7 and 8, melting of a thin metal coating 26 occurs when the power in the light spot exceeds a threshold characteristic of the composition and thickness of the metal film and the properties of the substrate. The spot power is modulated by the light intensity modulating assembly 44. The on-off transitions are kept short to make the location of the hole ends precise in spite of variations in the melting threshold. Such variations in the melting threshold can occur due to variations in the thickness of the metal coating and/or the use of a different material as the information storing layer.

The average power in the spot required to form an aperture in a thin metal coating 26 having a thickness between 200 and 300 Angstroms is of the order of 200 milliwatts. Since the FM carrier frequency is about 8 MHz, $8 \times 10^6$ holes of variable length are cut per second and the energy per hole is 2.5 and $10^{-9}$ joul.

In this first embodiment of a video disc member 10, a portion of the glass substrate is exposed in each aperture. The exposed portion of the glass substrate appears as a region of non-specular light reflectivity to an impinging reading beam. The portion of the metal coating remaining between successively positioned apertures appears as a region of high light reflectivity to an impinging reading beam.

When the forming of first and second indicia is being undertaken using a coating of photoresist, the intensity of the write beam 29' is adjusted to a level such that a forty-five degree rotation of the plane of polarization generates a light beam 29' of threshold intensity for exposing and/or interacting with the photoresist coating 26 while the photoresist coating is in motion and positioned upon the moving information storage member 10. The Pockels cell 68 and Glan-prism 70 combination comprises a light intensity modulating member which operates from the forty-five degree setup condition to a lower light transmitting state associated with a near zero degree state of operation, to a higher light transmitting state, associated with a near ninety degree state of operation. When the intensity of the write light beam 29' increases above the initially adjusted level or predetermine start intensity, and increases towards the higher light transmitting state. the incident write light beam 29' exposes the photoresist illuminated thereby. This exposure continues after the intensity of the write beam reaches the maximum light transmitting state and starts back down towards the initial predetermined intensity associated with a forty-five degree rotation of the plane of polarization of the light issuing from the write laser 30. As the rotation drops below the forty-five degree value, the intensity of the write beam 29' exiting the Glan-prism 70 drops below the threshold intensity at which the focused write beam fails to expose the photoresist illuminated thereby. This failure to expose the photoresist illuminated thereby continues after the intensity of the write beam reaches the minimum light transmitting state and starts back up towards the initial predetermined intensity associated with a forty-five degree rotation of the plane of polarization of the light issuing from the write laser 30.

The Pockels cell driver circuit 72 is typically a high gain and high voltage amplifier having an output signal providing an output voltage swing of 100 volts. This signal is intended to match the driving requirements of the Pockels cell 68. Typically, this means that the mid-voltage value of the output of the Pockels cell driver 72 provides a sufficient control voltage for driving the Pockels cell 68 through forty-five degrees so that about one half of the total available light from the laser 30 issues from the linear polarizer 70. As the output signal from the driver 72 goes positive, mid-voltage value, more light from the laser is passed. As the output signal from the driver 72 goes negative, less light from the laser is passed.

In the first embodiment using a metal coating 26, the output from the laser 30 is adjusted so as to produce an intensity which begins to melt the metal layer coating 26, positioned on the disc 10, when the output from the driver 72 is zero and the operating point of the Pockels cell is forty-five degrees. Accordingly, as the output from the driver 72 goes positive, melting continues. Also, when the output from the driver 72 goes negative, melting stops.

In a second embodiment using the photoresist coating 26, the output from the laser 30 is adjusted so as to produce an intensity which both illuminates and exposes the photoresist coating 26 when the output from the driver 72 is generating its mid-voltage value. Accordingly, as the output from the driver 72 goes positive, the illumination and exposure of the photoresist illuminated by the write beam continues. Also, when the output from the driver 72 goes negative, the illumination continues but the energy in the write beam is insufficient to expose the illuminated region. The term expose is herein being used for its technical meaning which describes that physical phenomenon which accompanies exposed photoresist. Exposed photoresist is capable of being developed and the developed photoresist is removed by standard procedures. Photoresist which is illuminated by light, insufficient in intensity to expose the photoresist, cannot be developed and removed.

In both the first and second embodiments just described, the absolute power level 80 illustrated by the line 80 in Figure 6 is adjusted upward and downward to achieve this effect by adjusting the power supply of the write laser 30. In combination with this adjustment of the absolute power level of the write laser 30, the potentiometer 236 is also used to cause indicia to be formed in the coating 26 when the beam 29 is rotated above forty-five degrees as previously described.

In a read only system as shown in Figure 10, the optical filter 180 is optional and usually is not required. Its use in a read only system introduces a slight attenuation in the reflected path thus requiring a slight increase in the intensity of the read laser 152 to insure the same intensity at the detector 158 when compared to a read only system which does not use a filter 180.

The converging lens 182 is optional. In a properly arranged read system the reflected read beam 150' has essentially the same diameter as the working area of the photodetector 158. If this is not the case, a converging lens 182 is employed for concentrating the reflected read beam 150' upon the smaller working area of the photodetector 158 selected.

Prior to giving the detailed mode of operation of an improved version of a mastering machine, it would do well to establish a number of terms which have a special meaning in the description contained hereinafter. The laser intensity generated by the writing laser source as it impinges upon the master video disc is employed to interact with the information bearing portion of the video disc to form indicia representing the carrier frequency and the frequency variations in time from the carrier frequency.

The threshold power level required of the laser beam at the point of impact with the information bearing layer of the video disc differs depending upon the material from which the information bearing layer is made. In the two examples given hereinabove describing a metal such as bismuth and a photosensitive material such as photoresist, the threshold power level required to form indicia differs significantly and represents a good example for illustrating the term threshold power. Obviously, the threshold power of other materials would also differ from each of the examples explained.

The indicia formed in a bismuth coated video disc master are alternate regions of light reflectivity and light non-reflectivity. The areas of light non-reflectivity are caused by the melting of the bismuth followed by the retracting of the bismuth before cooling to expose an underlying portion of the glass substrate. Light impinging upon the metal layer is highly reflective, while light impinging upon the exposed portion of the glass substrate is absorbed and hence light non-reflectivity is achieved.

The threshold power is that power from the laser beam required to achieve melting and retracting of the metal layer in the presence of a laser beam of increasing light intensity. The threshold power level is also represented as that intensity of a decreasing light intensity signal when the metal layer ceases to melt and retract from the region having incident light impinging thereupon. More specifically, when the power in the impinging light beam exceeds the threshold power requirements of the recording material, a hole is formed in the recording material. When the light power intensity in the impinging light beam is below the threshold power level of the recording material, no hole is formed in the recording medium. The forming of a hole and the non-forming of a hole by the impinging light beam is the principal manner in which the light beam impinging upon a bismuth coated master interacts with the bismuth layer to form indicia on the recording surface. The indicia represents a carrier frequency having frequency changes in time varying about the carrier frequency.

A video disc master having a thin layer of photoresist formed thereover has its own threshold power level. The mechanism whereby a light beam exposes a photoresist layer is pursuant to a photon theory requiring a sufficient number of photons in the impinging light beam to expose a portion of the photoresist. When the positive going modulated light beam contains sufficient photons above this threshold power level, the photoresist in that area is exposed so that subsequent development removes the exposed photoresist. When the photon level in a decreasing light intensity modulated light beam falls below the normal threshold power level of the photoresist, the photoresist ceases to be exposed to the extent that subsequent development does not remove the photoresist illuminated by an impinging light beam having photons below the threshold power level.

The impinging light beam from the modulated laser source interacts with the information bearing layer to fully expose or underexpose the photoresist layer illuminated by the impinging light beam. This is an interaction of the photons in the impinging light beam with the information bearing member to form indicia of the carrier frequency having frequency changes in time varying about the

carrier frequency. The indicia storing the carrier frequency and frequency change in time are more fully appreciated after the development step whereby those portions of fully exposed photoresist material are effectively removed leaving the underexposed portions on the video disc member.

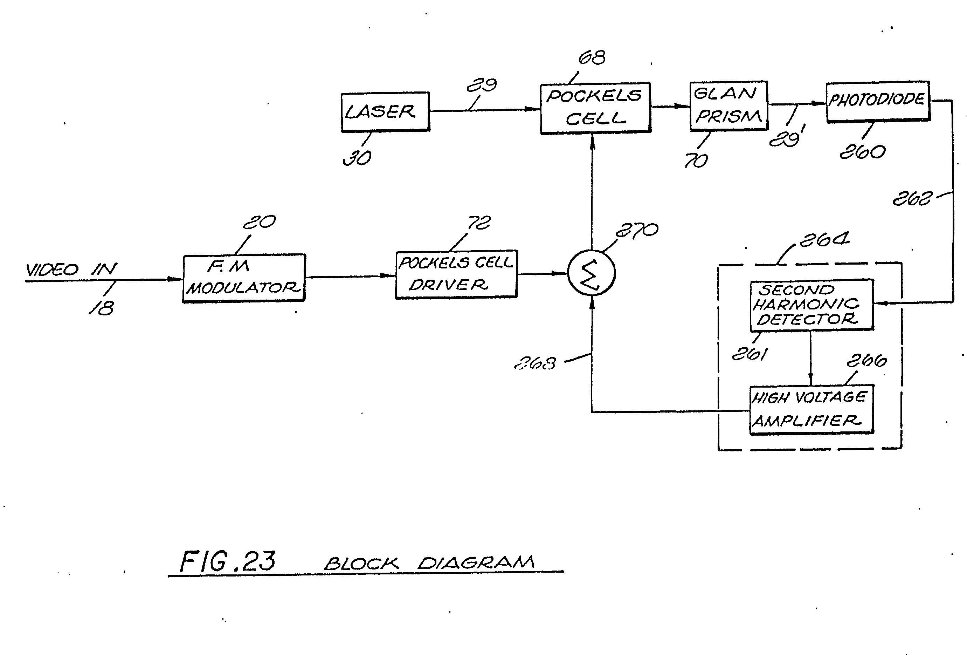

Referring to Figure 23, there is a block diagram of the Pockels cell bias servo system employed in the preferred embodiment of the present invention for maintaining the operating bias on the Pockels cell 68 at the half power point. The DC bias of the Pockels cell is first adjusted to its steady state condition such that the half power point of the Pockels cell-Glan prism combination coincides with the forty-five degree rotation point of the Pockels cell 68. This DC bias point is identified as the fixed bias point. In a system wherein the input video signal to the FM modulator 36 does not contain any second harmonic distortion, the DC bias position selected in the procedure just identified operates satisfactorily. However, when the video information input signal to the FM modulator contains second harmonic distortion products, these distortion products show up in the modulated light beam at 29'. The output from the FM modulator is applied to a Pockels cell driver 72 for developing the voltage required to drive the Pockels cell through its zero to ninety degree rotational shift. The unmodulated light beam from the laser 29 is applied to the Pockels cell 68 as previously described.

The purpose of the Pockels cell bias servo is to bias the Pockels cell 68 so that the output light signal detected at a photo diode 260 is as free of second harmonic content as possible.

The second harmonic distortion is introduced into the modulated light beam at 29' from a plurality of sources. A first of such sources is the non-linear transfer functions of both the Pockels cell 68 and the Glan prism 70. When the input video signal on the line 18 itself contains second harmonic distortion products this further increases the total second harmonic distortion products in the light beam at 29'.

The Pockels cell bias servo functions to adjust the DC bias applied to the Pockels cell 68, which DC bias biases the Pockels cell to its half power point, so as to minimize the second harmonic content of the output light beam.

The change in DC bias level from the half power point is achieved in the following sequence of steps. The modulated light beam 28' from the Pockels cell 68 is applied to a photo diode 260. The photo diode 260 operates in its standard mode of operation and generates a signal having the form of a carrier frequency with frequency variations about the carrier frequency. This frequency modulated waveform is a sufficiently linear representation of the light impinging upon the photo diode 261 to accurately reflect the signal content of the light modulated beam 29' impinging upon the disc surface. More specifically, the output signal from the photo diode 260 contains the distortion products present in the modulated light beam 29'. The output from the photo diode 260 is applied to a second harmonic detector 261 over a line 262 which forms a part of the bias control circuit 264. The output from the second harmonic detector is to a high voltage amplifier 266 which generates the DC bias signal over a line 268. The line 268 is connected to a summation circuit 270 which has as its second input signal the output from the Pockels cell driver 72. The DC bias signal on the line 268 is summed with the output from the Pockels cell driver 72 and is applied to the Pockels cell 68 for changing the DC bias of the Pockels cell 68.

Referring back to the operation of the second harmonic detector 261, this device generates a voltage which is approximately linear in the ratio of the second harmonic to the fundamental of the output light beam. Furthermore, the output signal reflects the phase characteristics of the second harmonic and if the second harmonic is in phase with the fundamental, the output of the second harmonic detector is in a first voltage level, ie., a positive level. If the second harmonic is opposite in phase with the fundamental, then the output of the second harmonic detector is at a second voltage level, ie., a negative voltage level. The output from the second harmoni detector is amplified through a high voltage amplifier 266 which provides a range of zero to three hundred volts of DC bias. This DC bias is summed with the signal from the FM modulator 20 amplified in the Pockels cell driver 72 and applied to the Pockels cell 68.

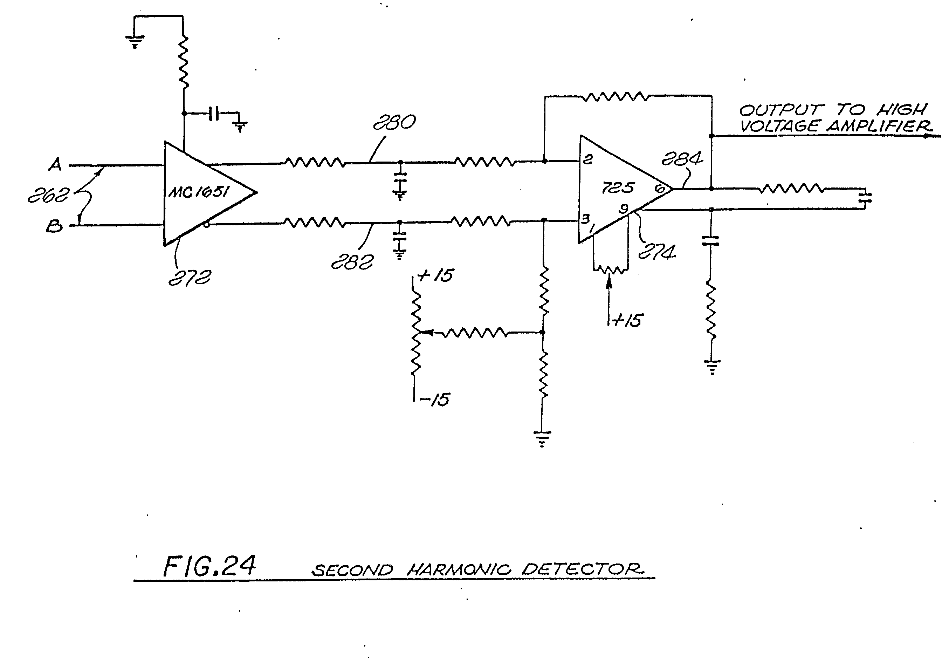

The second harmonic detector includes a limiter 272 shown with reference to Figure 24 and a differential amplifier 274 shown with reference to Figure 24. The output signal from the photo diode 260 is AC coupled to the limiter 272 over lines 276 and 278. The limiter 272 has a first output signal for application to the differential amplifier over a first output leg 280. The second output from the limiter 272 is applied to the second input of the differential amplifier over a second output leg 282. The output signals from the limiter 272 are logical complements of each other. More specifically, when one output is at a relatively high voltage level, the other output is at a relatively low voltage level. The two output signals on the legs 280 and 282 are fed into the differential amplifier 274. The output of this differential amplifier reflects the content of the second harmonic available on the input signal lines 276 and 278.

In a standard mode of operation, when the input signal from the photo diode 260 is substantially free of second harmonic distortion; then the output signal from the differential amplifier 274 at terminal 284 is a squarewave with exactly a 50% duty cycle and with voltage levels extending between two predetermined voltage levels above and below a constant reference level. The duty cycle of 50% refers to a high voltage half cycle being equal in width to the following low voltage half cycle. In this condition, the effective DC level of these two half cycles offset one another. Accordingly, the output of the differential amplifier 274 is, on the average, zero.

When a degree of second harmonic distortion is present in the output from the photo diode 260, the value of harmonic distortion shifts the mean value crossing from a symmetrical case to a non-symmetrical case. In this situation, the output from the differential amplifier is other than a squarewave with a fifty-fifty duty cycle. The differential amplifier therefore detects the effective DC level shift of the incoming signal and generates an output which is above or below zero, on the average, depending upon the asymmetrical nature of the input signal. The output of the differential amplifier is therefore applied to the high voltage amplifier which DC smooths the output from the differential amplifier 274 and amplifies the negative or positive resulting DC level. The resulting product is the required shift in bias signal for application to the Pockels cell to return the operating point of the Pockels cell to the half power point at which zero harmonic distortion occurs.

A summary of the standard operating mode of Pockels cell bias servo includes the generation of a light signal representing the distortion products present on the modulated light beam. Means are provided for detecting the value of second harmonic distortion present in this light beam and generating a signal representation of this distortion. The signal generated to represent the amount of second harmonic distortion also includes whether the second harmonic distortion is in phase with the fundamental frequency or the second harmonic distortion is out of phase with the fundamental frequency. The output signal representing the amount of second harmonic distortion and the phase of the second harmonic distortion with reference to the fundamental frequency is applied to a means for generating a bias signal necessary for application to the Pockels cell to bring it to an operating point at which second harmonic distortion ceases to exist. A summation circuit is provided for summing the change in bias signal with the input frequency modulated video signal. This summed voltage is applied as an input to the Pockels cell 68.

Figure 14 shows a series of waveforms illustraing an improved form of light modulation of a writing light beam 29. Line A of Figure 14 shows an idealized or simplified video waveform that is typically supplied as a video
signal from a video tape recorder or television camera.
This waveform is essentially the same as that shown in
Figure 4 and represents a video signal that is applied to
the FM modulator circuit 20. Two output signals are shown
on lines B and C, and each is an FM modulated output
signal and each carries the same frequency information.
The waveform on line B is a repeat of the waveform in
Figure 5 and is repeated here for convenience. This waveform on line B shows the output normally generated by a
mlulti-vibrator type FM modulator 20. The waveform shown
on line C shows the output generated by an FM modulator 20
having a triangular shaped output waveform. Both waveforms contain the same frequency information. The triangular shaped waveform gives enhanced results when used in
driving a Pockels cell 68 for light modulation of a constant intensity light beam applied through the Pockels
cell.

The frequencies contained in each waveform B and
C are at all times identical and each represents the
voltage level of the video waveform shown in line A. By
inspection, it can be seen that the lower amplitude
region of the video waveform generally indicated by the
numeral 75 corresponds to the low carrier frequencies and
higher amplitude regions of the video waveform as generally indicated at 77 corresponds to the higher frequency
shown in lines B and C. It is the custom and practice of
the television industry to utilize a one volt peak to peak
voltage signal having voltage variations in time as the
video signal generated by a television camera. These
signal characteristics are the same required to drive a
television monitor 166. The advantage of using a triangular shaped waveform for driving a Pockels cell 68 is to
match the Pockels cell's transfer characteristic with a
selected waveform of the modulating signal to achieve a
sinusoidal modulation of the light beam passing through
the Pockels cell and to the Glan prism 78. The triangular
waveform shown in line C is a linear voltage change with time. The linear voltage change versus time of the triangular driving waveform when multiplied by a sinusoidal voltage change versus light transfer function of the Pockels cell 68 gives a sinuscidally varying light intensity output from the Glan prism.

The waveform shown on line D illustrates the sinusoidal waveform which corresponds to the light intensity output from the Glan prism when the Pockels cell is driven by the triangular waveform shown on line C.

Referring specifically to the bottommost point at 285 and the topmost point at 286 of the waveform shown on line D, the point exactly equally distant from each is identified as the half power point. An understanding of the utilization of this half power point feature is required for high quality mastering operations.

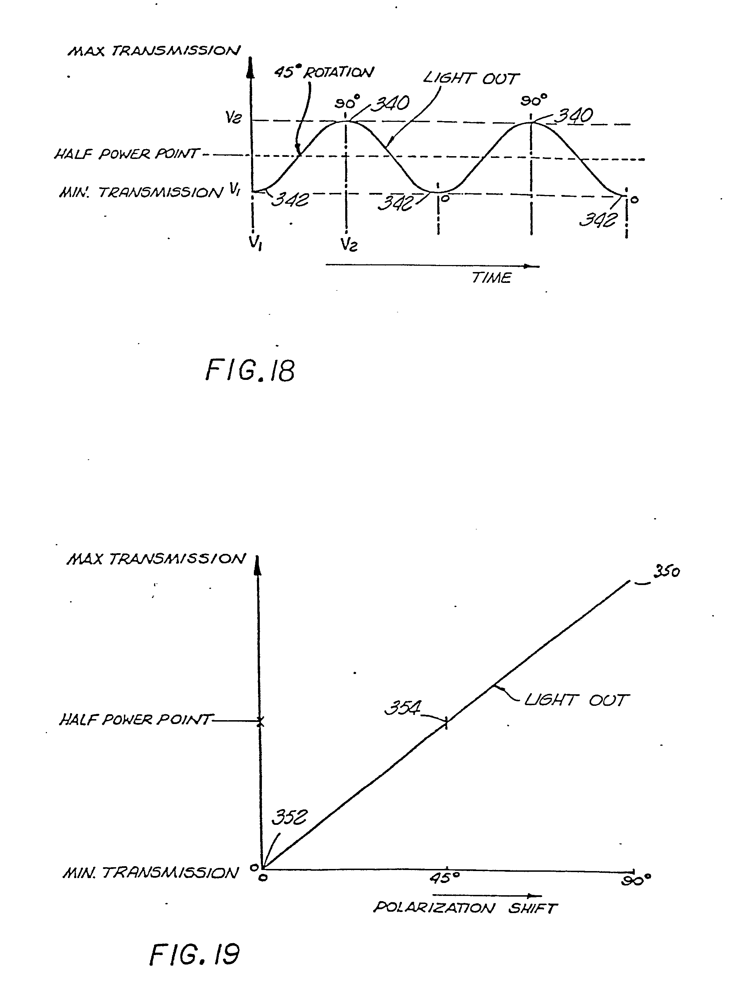

The peak to peak voltage of the triangular waveform is represented by a first maximum voltage level $V_2$ shown on line 287 of line C and by a second minimum voltage level $V_1$ on line 288. The voltage differential between points 287 and 288 is the driving voltage for the Pockels cell 68. This voltage differential is adjusted to equal that voltage required by the Pockels cell 68 to give a ninety degree rotation of the output polarization of the light passing through the Pockels cell 68. The bias on the Pockels cell is maintained such that voltage levels $V_1$ and $V_2$ always correspond to the zero degree rotation and the ninety degree rotation respectively of the light beam passing through the Pockels cell 68. The forty-five degree rotation of a light beam is half way between the two extremes of a triangle waveform. That half-way voltage is always the same for the Pockels cell 68. But the half-way voltage with respect to zero volts may drift due to thermal instabilities causing the half power voltage point to drift also. The correct biasing of the half-way voltage is completely described hereinafter with reference to Figures 18, 19 and 20.

While the waveform shown on line C of Figure 14 shows the triangular wave shape generated by the FM modulator 20, it also represents the wave shape of the signal generated by the Pockels cell driver 72. The output from the FM modulator is typically in a smaller voltage range, typically under 10 volts while the output from the Pockels cell driver 72 typically swings 100 volts in order to provide suitable driving voltage to the Pockels cell 68 to drive it from its zero rotational state to its ninety degree rotational state. In discussing the voltage levels $V_1$ and $V_2$ and the lines 288 and 287, respectively, representing such voltage points, reference is made to line C of Figure 14 because the output from the Pockels cell driver 68 has the identical shape while differing in the amplitude of the waveform. This was done for convenience and the elimination of a substantially identical waveform different only in amplitude.

Referring to Figure 15, there is shown a cross sectional, schematic view of a video disc formed according to the mastering process of the invention described herein. A substrate member is shown at 300 having a planar shaped upper surface indicated at 302. An information bearing layer 304 is formed to top the upper surface 302 of the substrate 300. The information bearing layer 304 is of uniform thickness over the entire surface 302 of the substrate 300. The information layer 304 itself has a planar shaped upper surface 306.

Figure 16 is shown positioned beneath line C of Figure 14 showing the intensity of the light beam passing from the Pockels cell - Glan prism combination in the improved embodiment which utilizes a voltage control oscillator in the FM modulator 20 generating a triangular shaped output waveform as the driving waveform shape to the Pockels cell 68. As previously described, the threshold power level of the information bearing layer is defined as that power required to form indicia in the information bearing layer in response to the impinging light beam. For a metal surface, the thermal threshold point is that power required to melt the metal layer and have the metal layer retract from the heated region of impingement. For a photoresist layer, the threshold power is that power level required to supply sufficient photons to completely expose the photoresist information bearing layer. In the case of the metal layer, the heated metal retracts from the impinging area to expose the substrate 300 position thereunder. In the case of the photoresist material, the photon power is sufficient to fully expose the total thickness of the photoresist layer 324 completely down to the upper surface 322 of the substrate 320 as shown in Figure 7.

It has been previously discussed how the half power point of the Pockels cell - Glan prism combination is located at a point halfway between a first operating point at which maximum transmission from a fixed intensity beam passes through the Glan prism and a second operating point at which minimum transmission from a fixed intensity beam passes through the Glan prism 70. The half power point is the point at which the light passing through tne Pockels cell has been rotated forty-five degrees from the point of zero power transmission.

In operation, the output power from the laser is adjusted such that the half power point of the Pockels cell-Glan prism combination provides sufficient energy to equal the threshold power level of the information bearing member employed, such as the member 304. The matching of the half power point of the Pockels cell-Glan prism combination ensures highest recording fidelity of the video frequency signal to be recorded and ensures minimum intermodulation distortion of the signal played back from the video disc recording member.

This matching of the power levels is illustrated with reference to line D of Figure 14 and Figure 15 and by the construction lines drawn vertically between the half power point represented by the line 290 shown on line D of Figure 14 and the apertures shown generally at 310 in Figure 15. The length of an aperture 310 is coextensive with the time that the transmitted intensity of the modulated light beam exceeds the half power point line 290 shown with reference to line D of Figure 14.

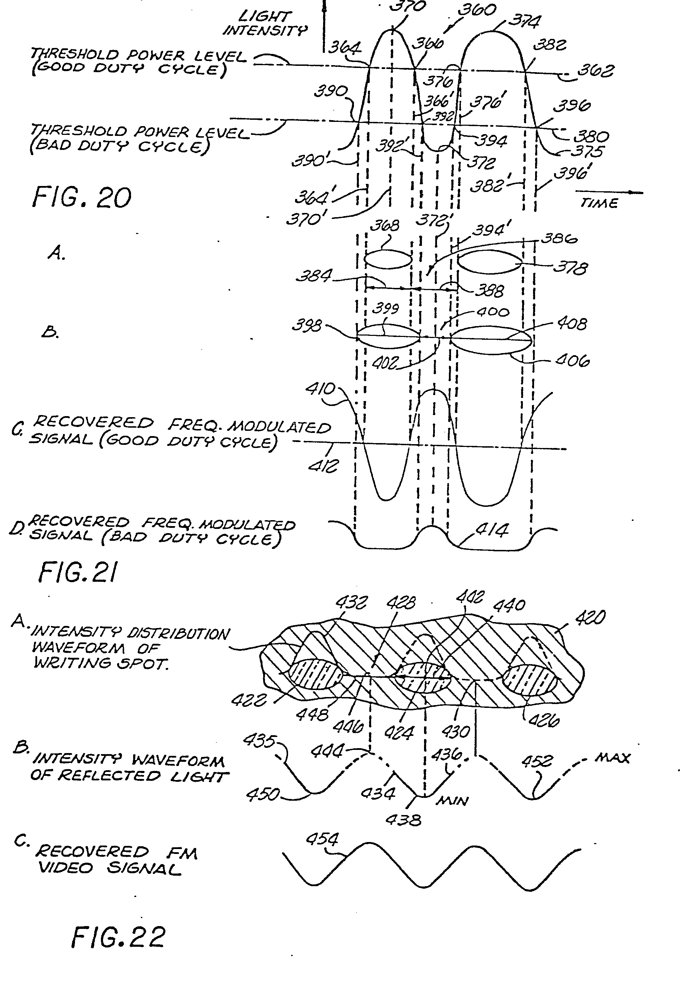

In this embodiment the half power point line 290 also represents the zero crossing of the triangular wave shape shown on line C of Figure 14. The zero crossing points are represented by lines 291 and 292 shown in Figures 14B and 16C, and the importance of regulating the half power point is explained in greater detail with reference to Figures 20 and 21.

Figure 16 shows an information storage member including a substrate 320 having a planar upper surface 322. A thin layer of photoresist 324 of uniform thickness is formed over the planar upper surface 322 of the substrate 320. The thin photoresist layer 324 is also formed with a planar upper surface 326. The photoresist layer 324 is a light responsive layer just as the metal bismuth layer 304 is a light responsive layer. Both the thin opaque metallized coating 304 and the photoresist layer 324 function to retain indicia representative of the video input signal. In the case of the metal layer 304, apertures 310 are formed in the metallized layer to form successive light reflective and light non-reflective regions in the information storage member.

Referring to Figure 17 showing the photoresist coated information storage member, regions 330 are formed in substantially the same manner as regions 310 were formed with reference to the structure shown in Figure 15. Rather than apertures 310 being formed as shown with reference to Figure 6, exposed regions 330 are formed corresponding to the apertures 310. The exposed photoresist material is represented in Figure 16 by cross hatching of the regions in the photoresist information storage layer 324. Subsequent development of the exposed photoresist material removes such exposed photoresist material leaving apertures comparable to the apertures 310 shown with reference to Figure 15.

In operation, when using the photoresist coated substrate video disc member, the output power of the writing laser is adjusted such that the power of the modulated laser beam passing through the Pockels cell-Glan prism combination at the half power point of the Glan prism equals the photon threshold power required to completely expose the photoresist illuminated by the impinging light beam. Just as with the bismuth coated master video disc system, this ensures highest fidelity recording and minimum intermodulation distortion during the playback of the recorded video signal.

In referring to both Figures 15 and 16, that portion of the light beam passing through the Glan prism above the half power point as represented by that portion of the waveform shown on line D of Figure 14 which is above the line 290, causes an irreversible change in the characteristics of the light sensitive surface 304 in the case of the bismuth coated video disc shown in Figure 15 and the photoresist coating 324 shown with reference to the photoresist coated video disc shown in Figure 16. In the case of the bismuth coated video disc member 300, the irreversible changes take the form of successively formed apertures 310 in the opaque metallized coating 304. In the case of the photoresist coated substrate 320, The irreversible alteration of the characteristic of the photoresist layer 324 occurs in the form of successive fully exposed regions 332.

While bismuth is listed as the preferred metal layer, other metals can be used such as tellurium, inconel and nickel.

Referring to Figure 18, there is shown the transfer characteristic of the Pockels-Glan prism combination as a result of the sinusoidal rotation in degrees of the light passing through the Pockels cell 68 versus linear voltage change of input drive to the Pockels cell 68. The ninety degree rotation point is shown at point 340 and equals the maximum light transmission through the Glan prism 70. The zero degree rotation point is shown at points 342 and equals the zero or minimum light transmission through the Glan prism 70. The zero light transmission point 342 corresponds to the voltage level $V_1$ represented by the line 288 in line C of Figure 14. The ninety degree rotation point corresponds with the voltage level $V_2$ represented by the line 287 on line C of Figure 14. The point half way between these two voltages represented by the line 292 is equal to $V_2$ minus $V_1$ over 2.

and corresponds to a forty-five degree rotation of the light beam passing through the Pockels cell.

As is well known, the power through the Pockels cell is substantially unchanged. The only characteristics being changed in the Pockels cell is the degree of rotation of the light passing therethrough. In normal practice, a Pockels cell 68 and Glan prism 70 are used together to achieve light modulation. In order to do this, the principal axes of the Pockels cell 68 and the Glan prism 70 are put into alignment such that a light beam polarized at ninety degrees rotation passes substantially undiminished through the Glan prism. When the same highly polarized light is rotated by the Pockels cell 68 for ninety degrees rotation back to the zero degree rotation, the light beam does not pass through the Glan prism.70. In actual practice, the full transmission state and zero transmission state is not reached at high frequencies of operations. The waveform shown in Figure 18 shows the transfer characteristics of the Pockels cell 68 rotated to correspond with two cycles of frequency modulated video information. This demonstrates that the transfer function continuously operates over the zero to ninety degree portion of the transfer function curve.

Referring to Figure 19, there is shown the transfer characteristic of a Glan prism 70. At point 350, maximum transmission through the Glan prism 70 is achieved with a ninety degree rotation of the incoming light beam. At point 352, minimum or zero light transmission through the Glan prism 70 is achieved at zero rotation of the incoming light beam. Half of the intensity of the impinging light beam is passed through the Glan prism 70 as indicated at points 354 which corresponds to forty-five degrees rotation of the light entering the Glan prism 70. Obviously, the absolute power of the light passing through the Glan prism 70 at the forty-five degree rotation can be adjusted by adjusting the light output intensity of the light source. In this embodiment, the light source is the writing laser 30.

In the preferred embodiment, the power output from the writing laser 30 is adjusted such that the intensity of the light passing through the Glan prism at the half power point coincides with the threshold power level of the recording medium. Since more power is required to melt a bismuth layer than is required to fully expose a photoresist layer, the absolute intensity of a writing beam used in writing on a bismuth master disc is greater than the intensity of a writing laser used to interact with a photoresist covered master video disc.

Referring collectively to Figures 20 and 21, there is shown a series of waveforms useful in explaining the relationship between length of a hole cut in a master video disc by the writing laser 30 and the length of uncut land area between successively formed holes. This relationship can be referred to as a relationship formed by the value of the peak cutting power, the average cutting power and focus of the spot on the metal layer. Collectively, these terms have evolved into a single term known as duty cycle which term represents all three such characteristics.

As previously described, the energy required to interact with the information bearing layer on video disc substrate is that energy necessary to cause irreversible changes in the material selected for placement on the master video disc member. In the case of a bismuth coated master, the energy required is that needed to selectively remove the portion of the bismuth coated layer in those locations when the energy is above the threshold energy level of the bismuth layer. If this energy contained in the spot of light is not focused properly upon the bismuth layer, then the energy cannot be used for its intended function and it will be dissipated without effecting its intended function. If some cutting occurs due solely to an out of focus spot, distortions are introduced into the mastering process.

If the peak cutting power greatly exceeds the threshold power level of the recording medium, destructive removal of material occurs and provides a surface containing distortion products caused by this destructive removal. The average cutting power is that power at a point midway between a first higher cutting power and a second lower cutting power. As just described, the average cutting power is preferably fixed to equal the threshold power level of the recording medium. In this sense, the intensity of the light beam above the average cutting power interacts with the information bearing layer to form indicia of the signal to be recorded. The intensity of the light beam below the average cutting power fails to heat a bismuth coated master to a point needed in the hold forming process or fails to fully expose a portion of a photoresist coated master.

Referring briefly to lines B and C of Figure 14, the adjustment of the average cutting power to coincide with the line 291 shown in line B and with the line 292 shown with reference to the line C of Figure 14, results in a duty cycle where the length of a hole equals the length of the "land" area position and successively thereafter. This is known as a 50% or fifty-fifty duty cycle. A fifty-fifty duty cycle is the preferable duty cycle in a recording procedure but commercially acceptable playback signals can be achieved in the range from sixty-forty to forty-sixty. This means that either the hole or the intervening land member becomes larger while the other member becomes smaller.

Referring to Figure 20, there is shown a waveform represented by a line 360 corresponding to two cycles of the light intensity transmitted through the Pockels cell-Glan prism combination and represented more specifically on line D of Figure 14. The threshold power level of the recording medium is represented by a line 362. The threshold power level of the recording medium is caused to be equal to the half power point of the light intensity transmitted by the Pockels cell-Glan prism combination by adjusting the absolute intensity of the writing laser 30.

When the threshold level is properly adjusted at the half power point, an indicia is formed on the information surface layer of the master video disc beginning at point 364 and continuing for the time until the intensity falls to a point 366. Dash lines shown at 364' and 366' are drawn to line A of Figure 12 showing an indicia represented by the eclipse 368 which has been formed for the period of time when the light intensity continues to rise past the point 364 to a maximum at 370 and then falls to a point 366. The light intensity below point 366 falls to a minimum at 372 and continues to rise towards a new maximum at 374. At a certain point between the lower intensity level 372 and the upper intensity level 374, the light intensity equals the threshold power level of the recording medium at 376. Beginning at point 376, the energy in the light beam begins to form an indicia represented by the eclipse 378 shown on line A of Figure 20. A dotted line 376' shows the start of formation of indicia 378 at the point when the light intensity exceeds the threshold level 362. The indicia 378 continues to be formed while the light intensity reaches a maximum at 374 and begins to fall to a new minimum at 375. However, at the intersection of line 360 with the threshold power level at 362 the light intensity falls below the threshold power level and the indicia is no longer formed. In the preferred embodiment, the length of the indicia represented by a line 384 equals the length of the land region shown generally at 385 as represented by the length of the line 388. Accordingly, the matching of the half power point light intensity output from the Pockels cell-Glan prism combination with the threshold power level of the recording surface results in a fifty-fifty duty cycle wherein the length of the indicia 368 equals the length of the next succeeding land region 386. Points 364, 366, 376 and 382 shown on the line 360 represent the zero crossing of the original frequency modulated video signal. Hence, it can be seen how the indicia 368 and 386 represent the frequency modulated video signal. This representation in the preferred embodiment represents a fifty-fifty duty cycle and is achieved by adjusting the half power level of the beam exiting from the Pockels cell-Glan prism combination to equal the threshold power level of the recording medium.

The waveform shown with reference to Figure 20,
including the variable light intensity represented by the
line 360, represents a preferred mode of operation to
achieve 50/50 duty cycle independent of the recording
medium employed on the master video disc member. The
absolute intensities at the various points change accord-
ing to the absolute intensities required for the modulated
light beam to interact with the recording surface, but the
relative wave shapes and their relative locations remain
the same. More specifically, the absolute intensity of
the threshold power level for bismuth is different than
the absolute intensity of the threshold power level for
photoresist, but the relationship with the intensity line
360 is the same.

Referring to the combination of Figure 20 and
line B of Figure 21, there will be described the results
of failing to match the half power point output of the
Pockels cell-Glan Prism combination with the threshold
power level of the recording medium. Referring to Figure
20, a second dash line 380 represents the relationship
between the actual threshold power level of the recording
medium being used with the light intensity output from
the Pockels cell 68-Glan Prism 70 combination. The threshold power level line 380 intersects the intensity line
360 at a plurality of locations 390, 392, 394 and 396. A
line 390' represents the intersection of the light intensity line 360 with the threshold power level 380 and
signals the start of the formation of an indicia 398 shown
on line B of Figure 21. The indicia 398 is formed during
the time that the light intensity is above the threshold
power level. The length of the indicia 398 is represented
by the time required for the light intensity to move to
its maximum at 370 and fall to the threshold point 392 as
is shown by a line 399. The length of a land area indicated generally at 400 has a length represented by a line
402. The length of a line 402 is determined by the time
required for the light intensity to move from threshold
point 392 to the next threshold point 394. During this
time, the intensity of the light beam is sufficiently low as to cause no interaction with the recording medium. A second indicia is shown at 406 and its length corresponds with the point at which the intensity of the waveform represented by the line 360 exceeds the threshold power level at point 394. The length of the indicia 406 is shown by a line 408 and is determined by the time required for the light intensity to rise to a maximum at 374 and fall to the threshold level at point 396.

Various lines are shown indicating the beginning and ending of the indicia and intravening land areas by employing primed numbers to identify the corresponding intersections of the light intensity line 360 with the threshold power level lines 362 and 380.

The successively positioned indicia 398 and land region 400 represent a single cycle of the recorded frequency modulated video signal. The indicia 398 represents approximately 65 percent of the sum of the length of the line 399 and the line 402. This represents a duty cycle of 65/35 percent. Sixty-five percent of the available space is an indicia while thirty-five percent of the available space is land area. Typically, the indicia in the final format is a light scattering member such as a bump or hole, and the land area is a planar surface covered with a highly reflective material.

The frequency modulated video information represented by the sequentially positioned light non-reflective member 368 and light reflective member 386 shown in line A of Figure 20 represents the preferred duty cycle of 50/50. When the photoresist mastering procedure is employed, the reflectivity of the upper surface of the photoresist layer is not significantly altered by the impingement of the writing beam such as to be able to detect a difference between reflected light beams from the developed and not developed portions of the photoresist member. It is because of this effect that a read-after-write procedure, using a photoresist coated master video disc is not possible.

Referring to line C of Figure 20, there is shown a representation of the recovered video signal represented by the sequence of indicia 368 and land area 386 shown on line A. The waveform shown in line C is an undistorted sine wave 410 and contains the same undistorted frequency modulated information as represented by the light intensity waveform represented by the line 360 shown in Figure 11. The sine wave shown in line C of Figure 20 has a center line represented by a line 412 which intersects the sine wave 410 in the same points of intersection as the line 362 intersects the intensity line 360 shown in Figure 20.

Referring to line D of Figure 20, there is shown a recovered frequency modulated video signal having bad second harmonic distortion. The fundamental frequency of the waveform represented by a line 414 shown in line D is the same as that contained in the waveform shown on line C. However, the information shown in Line D contains bad second harmonic distortion. When used in a system in which bad second harmonic distortion is not a disabling problem, the attention to a 50/50 duty cycle situation explained hereinabove need not be strictly followed. However, when it is necessary to have a substantially undistorted output signal recovered from the video disc surface, it is necessary to follow the procedure described hereinabove.

Referring to Figure 21 there is shown the relationship between the intensity of the reading spot in the reading beam as it impinges upon successively positioned light reflective and light non-reflective regions formed during a preferred form of the mastering process. In a preferred embodiment, a metal is used for this purpose and the preferred metal as disclosed is bismuth.

Line A of Figure 21 shows a plurality of indicia formed in the surface of a video disc master. In the preferred embodiment the holes formed in a bismuth layer 420 are shown at 422, 424 and 426. The intervening portions of the layer 420 which are unaffected by the formation of the holes 422, 424 and 426 are sometimes called "land areas and are indicated generally at 428 and 430. The land areas are highly reflective. The formation of the holes 422, 424 and 426 expose the underlying glass substrate

which is essentially light absorbing and hence the glass substrate is a light non-reflective region. The waveform shown at 432 represents the light intensity waveform of the spot in the read beam as the spot passes over a light non-reflective region. This indicates the spacial relationship between the spot as it moves over a light non-reflective region.

Referring to line B of Figure 21, there is shown a waveform represented by a line 434 indicating the intensity waveform of the reflected light as a spot having the intensity relationship shown in Figure A passes over a successively positioned light reflective and light non-reflective region. A solid line portion 436 of the line 434 shows the intensity waveform of the reflected light as the spot passes over the light non-reflective region 424. The intensity of the reflected light shows a minimum at point 438 which corresponds with the center of the non-reflective region 424. The center of the non-reflective portion 424 is shown on a line 440 at a point 442. The intensity waveform of the reflected light is a maximum, as shown at 444, when corresponding to a center point 446 of the land area 428 positioned between successive non-reflective regions 422 and 424 respectively. The center point 446 is shown on a line 448 representing the center line of the information track. The dotted portion of the line 434 represents the past history of the intensity waveform of the reflected light when the light passed over the non-reflective region 422. A dotted portion 452 of the waveform 434 shows the expected intensity of the reflected light beam when the reading spot passes over the non-reflective region 426.

Referring to line C of Figure 21, there is shown the recovered electrical representation of the light intensity signal shown on line B. The electrical representation is shown as a line 454 and is generated in the photodetector 70 shown in Figure 1.

A schematic diagram of a suitable high voltage amplifier is shown in Figure 25

A special advantage of the read while write capability of the mastering procedure herein described includes the use of the instantaneous monitoring of the information just written as a means for controlling the duty cycle of the reflective and non-reflective regions. By displaying the recovered frequency modulated video signal on a television monitor during the writing procedure, the duty cycle can be monitored. Any indication of the distortion visible on the monitor indicates that a change in duty cycle has occurred. Means are provided for adjusting the duty cycle of the written information to eliminate the distortion by adjusting the duty cycle to its 50/50 preferred operating point. A change in duty cycle is typically corrected by adjusting the absolute intensity of the light beam generated in the laser 30 in a system having either an average intensity biasing servo or a second harmonic biasing servo and in conjunction with circuitry for adjusting the half power point output of the Pockels Cell-Glan Prism combination to equal the threshold power level of the recording medium. The term half power point and average intensity are interchanged in the portions of the specifications and claims which concern the use of the triangular shaped wave form generated by the FM modulator. The modulated light beam 40 exiting from the Glan Prism 38 is of sinusoidal shape. In this situation the half power point equals the average intensity, and this would be the case for any symmetrical wave form. A frequency modulated output from an FM modulator has been found to act as such a symmetrical wave form.

While the invention has been particularly shown and described with reference to a preferred embodiment and alterations thereto, it would be understood by those skilled in the art that various changes in form and detail may be made therein without departing from the spirit and scope of the invention.

CLAIMS

1.    A method of writing a signal information track on a disc having a surface capable  of responding to a certain intensity of laser or other radiation (the threshold level) by being converted from having one radiation reflecting characteristic to having a second characteristic, in which a beam of radiation is directed at a local point along the track and is modulated in intensity as the beam moves along the track to produce first indicia while the beam intensity is above the threshold level and second indicia while it is below that level, and in which the modulation is in accordance with the signal information which is in the form of a wave whose amplitude alternates between maximum and minimum values so that the first indicia are produced while the wave is at the maximum amplitude and the second indicia are produced while the wave is at the minimum amplitude.

2.    A method as claimed in Claim 1 in which the signal information is in the form of a square wave.

3.    A method as claimed in Claim 1 or Claim 2 in which the signal information wave represents a frequency modulated video signal in which the period while the amplitude is at maximum and minimum values depends upon the modulator frequency.

4.    A method as claimed in any of the preceding claims in which modulation of the beam intensity is achieved by a device which rotates the plane of polarisation of the radiation between 0 and $90^{\circ}$ respectfully at the maximum and minimum amplitudes of the signal information wave.

5.    A method as claimed in Claim 4 including
means responsive to the power of the modulated
beam for providing a feedback signal biasing the
modulating means, so that the plane of polarisation
is at 45$^O$ when the modulated beam is at its half
power level.

6.    Apparatus for storing an information signal
upon an information storage member, comprising;
first means for providing an information signal to
be recorded, said signal having its informational
content in the form of a cyclical signal having
amplitude changes with time; an information storage
member including a substrate having a first surface
and a light responsive coating covering said first
surface for retaining indicia representative
of said information signal; said coating having a
threshold power level above which said indicia are
formed means for imparting uniform motion to said
storage member; a light source for providing a light
beam, and said light beam being of sufficient
intensity for interacting with said coating while
said coating is in motion and said coating is
position upon said moving information storage
member, and said light beam being of sufficient
intensity for altering said coating to retain
indicia representative of said information signal; said
intensity of said light beam being adjustable relative
to said theshold power level of said coating of said
member; optical means for defining an optical
path between said light source and said storage
member including said coating, and said optical means
being further employed for imaging said light beam
to a spot upon said coating; optical modulator means positioned in said optical path between said
light source and said storage member, and said
optical modulator means operating over a range between
a maximum light transmitting state and a minimum
light transmitting state for intensity modulating
said light beam with said information to be stored;
said optical modulator means is responsive to said
information signal and changes between its maximum
light transmitting state and its minimum light
transmitting state during each cycle of said
information signal for modulating said light beam with
the information signal to be stored; said optical
modulator means has an intermediate light transmitting
state at which the instantaneous power in said
modulated light beam equals one half that of said
modulated light beam transmitted at said maximum
state, and said intermediate light transmitting
state equals the threshold power level of said
coating; and said light passing through said optical
modulator means and focused upon said coating
by said optical means begins to form indicia in
said coating representative of said information signal
to be stored when said intermediate light transmitting
state is exceeded.

7.    A method of writing a signal information track
on a disc having a surface capable of responding to a
certain intensity of laser or other radiation (the
threshold level) by being converted from having one
radiation reflecting characteristic to having a second
characteristic in which a beam of radiation is directed at a local point along the track and is modulated in intensity as the beam moves along the track to produce first indicia while the beam intensity is above the threshold level and second indicia while it is below that level, and in which the intensity of the beam is controlled automatically so that the average intensity of the modulated beam is the threshold level.

8.      Apparatus for writing a signal information track on a disc having a surface capable of responding to a certain intensity of laser or other radiation (the threshold level) by being converted from having one radiation reflecting characteristic to having a second characteristic including a modulator of the intensity of the radiation to be directed at a local point along the track including a modulator driver responsive to the signal information to drive the modulator whereby the plane of polarisation of the radiation directed through the modulator is varied within the range $0-90^{\circ}$, and characterised by a biassing circuit for the modulator including means for setting a reference signal to correspond to the threshold level for the disc on which the track is being written, means responsive to the average intensity of modulated radiation, and a feedback loop for continuously adjusting the modulator bias in dependence on any difference between the reference signal and the said average value so that there is $45^{\circ}$ of rotation of the plane of polarisation when the signal information corresponds with a radiation intensity equal to the threshold level.

0048041

9.    Apparatus for writing a signal information track on a disc having a surface capable of responding to a certain intensity of laser or other radiation (the threshold level) by being converted from having one radiation reflecting characteristic to having a second characteristic, including means for modulating in intensity a beam of radiation directed at a local point along the track as the beam moves along the track, the modulation being in accordance with the signal information and characterised by means for generating a signal responsive to the second harmonic content of the intensity modulated beam at the signal information carrier frequency and a feedback circuit arranged to bias the modulating means in response to the second harmonic signal such that in the second harmonic distortion is a minimum.

10.    A method of writing a signal information track on a disc having a surface capable of responding to a certain intensity of laser or other radiation (the threshold level) by being converted from having one radiation reflecting characteristic to having a second characteristic, in which the intensity of the radiation directed at a local point along the track is modulated in accordance with the signal information which is in the form of a frequency modulated continuous triangular waveform, by a modulator having a sinusoidal relationship between its control voltage and its radiation transfer function.

KILBURN & STRODE
Chartered Patent Agents
Agents for the Applicants

FIG. I

0048041

**FIG.2**

**FIG.3**

**FIG.9**

MOTION CONTROL ASSEMBLY

SPINDLE SERVO

MOTOR

TRANSLATION DRIVE

DIVIDER

COLOR SUBCARRIER CRYSTAL OSC

DIVIDER

0048041

FIG. 4

79

73

77

75

FIG. 5

79a

76

74  78

FIG. 6

80

I

T →

FIG. 7

INTENSITY

80  92

96  29'

92

92

90° ROTATION

102

45° ROTATION

100

0° ROTATION

98

94

TIME

94

FIG. 8

37  38  37

37a  38a

217

262  260

10

FIG. 10

FIG. 11

0048041

WRITE BEAM 29'

212

READ BEAM 150

56

52

216

38

26

10

157

29'

37

42

26'

217

218

**FIG. 12**

225

29"

FROM MIRROR

SILICON PHOTO DIODE

232

227

226

230

228

DIFF. AMP.

244

248

246

250

238

242

POWER SUPPLY

48

236

234

240

226

226

**FIG. 13**

VIDEO WAVEFORM

A.

77

75

MULTIVIBRATOR
MODULATOR OUTPUT
B.

291

TRIANGLE GENERATOR
MODULATOR OUTPUT
C.

$V_2$

$V_1$

287

292

288

MAX TRANS

D. HALF POWER

O POWER

286

290

285

**FIG.14**

310    310

306
304
302
300

**FIG.15**   CROSSECTION OF MASTER VIDEO DISC.

330

326
324
322
320

**FIG.16**

330    330

322
320

**FIG.17**

MAX TRANSMISSION

45° ROTATION

LIGHT OUT

90° 340

90° 340

$V_2$

HALF POWER POINT

MIN. TRANSMISSION $V_1$

342 342 342

$V_1$ $V_2$

TIME

FIG. 18

MAX TRANSMISSION

350

LIGHT OUT

354

HALF POWER POINT

352

MIN. TRANSMISSION 0

45° 90°

POLARIZATION SHIFT

FIG. 19

0048041

LIGHT
INTENSITY

THRESHOLD POWER LEVEL
(GOOD DUTY CYCLE)

THRESHOLD POWER LEVEL
(BAD DUTY CYCLE)

FIG. 20

TIME

A.

B.

C. RECOVERED FREQ. MODULATED
SIGNAL (GOOD DUTY CYCLE)

D. RECOVERED FREQ. MODULATED
SIGNAL (BAD DUTY CYCLE)

FIG. 21

A. INTENSITY DISTRIBUTION
WAVEFORM OF
WRITING SPOT.

B. INTENSITY WAVEFORM
OF REFLECTED LIGHT

MAX

MIN

C. RECOVERED FM
VIDEO SIGNAL

FIG. 22

FIG.23    BLOCK DIAGRAM

FIG.24    SECOND HARMONIC DETECTOR